# EUROPEAN PATENT APPLICATION

(11) **EP 4 823 140 A1**
(43) Date of publication of application: **14.10.2026**
(21) Application number: 24911228.5
(22) Date of filing: 25.12.2024
(51) Int. Cl.: H04W 12/0433

(54) **COMMUNICATION METHOD AND APPARATUS**

(30) Priority: 29.12.2023 CN 202311868620
(71) Applicant: Huawei Technologies Co., Ltd., Shenzhen, Guangdong 518129 (CN)
(72) Inventor: GU, Zhifang, Shenzhen, Guangdong 518129 (CN)
(74) Representative: Pfenning, Meinig & Partner mbB
(86) International application number: PCT/CN2024/142281
(87) International publication number: WO 2025/140305

(57) **Abstract**

A communication method and apparatus are provided, addressing key misalignment between a terminal device and access network devices during a subsequent or multiple handovers that would otherwise cause communication failure. The method comprises: determining that a trigger condition for a target cell is satisfied and that a first message from a first access network device has been received, the first message indicating that key notification to a candidate access network device has been completed; and determining, based on the first message, to send a second message to the target cell to access the target cell. The first access network device is an access network device to which a current serving cell of the terminal device belongs, and the target cell is one of candidate cells managed by the candidate access network device. The method enables the terminal device and the target cell to communicate based on a same key, thereby improving communication security.

## Description

### CROSS-REFERENCE TO RELATED APPLICATION

This application claims priority to Chinese Patent Application No. 202311868620.2, filed with the China National Intellectual Property Administration on December 29, 2023 and entitled "COMMUNICATION METHOD AND APPARATUS", which is incorporated herein by reference in its entirety.

### TECHNICAL FIELD

The present application relates to the field of communication technologies, and in particular, to a communication method and apparatus.

### BACKGROUND

In a mobile communication system, due to a change in a position of a terminal device, a communication link between the terminal device and an access network device changes, and the terminal device needs to perform cell handover or access network device handover. When access network device handover occurs, the terminal device typically needs to perform key change; that is, when communicating with a source access network device and a target access network device, different keys are used to perform processing such as encryption and integrity protection on data, so as to achieve secure communication.

For a mobility management technology that supports "subsequent handover" or "multiple handovers," an access network device configures a plurality of candidate cells for a terminal device, and these candidate cells may be located in different access network devices. The terminal device may perform handover among the candidate cells multiple times. How to align keys used by the terminal device and the access network devices to ensure normal communication is a problem worthy of study.

### SUMMARY

The present application provides a communication method and apparatus, configured to solve a problem that during a subsequent handover or multiple handovers, a key of a terminal device and a key of an access network device are not aligned, resulting in communication failure.

According to a first aspect, a communication method is provided, where an execution body of the method may be a terminal device, or a chip, a chip system, or a circuit for a terminal device. The method may be implemented by the following steps: determining that a trigger condition for a target cell is satisfied and that a first message from a first access network device has been received, where the first message is used to indicate that key notification to a candidate access network device has been completed; and determining, based on the first message, to send a second message to the target cell, where the second message is used to access the target cell; wherein the first access network device is an access network device to which a current serving cell of the terminal device belongs, and the target cell is one of candidate cells managed by the candidate access network device.

In an embodiment of the present application, the terminal device may determine, by using the first message, that the access network device to which the target cell belongs has obtained (or is about to obtain) a key for a next handover. The terminal device performs cell handover after receiving the first message, which facilitates the terminal device and the target cell to communicate based on a same key, thereby improving communication security.

In a possible design, the first message comprises second information, wherein the second information is used to indicate that key notification to the candidate access network device has been completed. In the foregoing manner, the second information can explicitly indicate that key notification to the candidate access network device has been completed.

In a possible design, the first message comprises second information and third information, wherein the second information is used to indicate that key notification to the candidate access network device has been completed, and the third information is used to indicate a parameter related to key update. In the foregoing design, by carrying the third information, the terminal device is facilitated in deriving a key, thereby further facilitating the terminal device and the target cell to communicate based on a same key, thereby improving communication security.

In a possible design, the first message comprises third information, the third information being used to indicate a parameter related to key update. In the foregoing design, by carrying the third information, the terminal device is facilitated in deriving a key, thereby further facilitating the terminal device and the target cell to communicate based on a same key, thereby improving communication security. Furthermore, the third information can implicitly indicate that key notification to the candidate access network device has been completed, thereby saving signaling overhead.

In a possible design, the third information comprises at least one of: a next hop chaining count, or a key set change indicator.

In a possible design, the method further comprises: determining a key of the target cell based on information of the target cell and the third information. With the foregoing design, a rule by which the terminal device derives a key can be made consistent with a rule by which the access network device to which the source cell belongs derives a key, thereby further facilitating the terminal device and the target cell to communicate based on a same key, thereby improving communication security.

In a possible design, the information of the target cell comprises at least one of: a physical cell identifier of the target cell, or downlink frequency information of the target cell.

In a possible design, the method further comprises: in a case where a key needs to be updated after handover to the target cell, determining to wait to receive the first message. Since in some scenarios the terminal device does not need to update a key after handover to the target cell, for example, in an intra-site handover, the foregoing approach of waiting to receive the first message only in a case where a key needs to be updated, and not waiting to receive the first message in a case where a key does not need to be updated, can reduce handover latency in a case where a key does not need to be updated.

In a possible design, determining that a key needs to be updated after handover to the target cell comprises: determining that the access network device to which the target cell belongs is different from the first access network device.

In a possible design, the method further comprises: sending a third message to the first access network device, the third message being used to request the first access network device to notify the candidate access network device of a key. In the foregoing manner, after the trigger condition for the target cell is satisfied, requesting, by using the third message, the first access network device to notify the candidate access network device of a key can enable the access network device to which the target cell belongs to obtain the key in a timely manner, and thereby reduce handover latency.

In a possible design, the third message further indicates that the trigger condition for the target cell is satisfied. In this manner, the third message can, by indicating that the trigger condition for the target cell is satisfied, implicitly request the first access network device to notify the candidate access network device of a key.

In a possible design, the method further comprises: in a case where channel quality of the serving cell is greater than or equal to a threshold, determining to wait to receive the first message.

Since there may be a time difference between the trigger condition for the target cell being satisfied and the first message being received, in the foregoing design, by waiting to receive the first message when the channel quality of the serving cell is relatively good, the terminal device can continue to communicate with a network through the serving cell while waiting for the first message, thereby reducing as much as possible an impact of the cell handover on terminal device communication.

In a possible design, the method further comprises: receiving a fourth message, the fourth message being used to configure the trigger condition for the target cell.

According to a second aspect, a communication method is provided, where an execution body of the method may be an access network device, or a chip, a chip system, or a circuit for an access network device. The method may be implemented by the following steps: receiving first information from a second access network device, and determining a first key based on the first information, wherein the first information comprises information of at least one candidate cell of a terminal device; and sending the first key to a candidate access network device to which the at least one candidate cell belongs, and after sending the first key, sending a first message to the terminal device, the first message indicating that key notification to the candidate access network device has been completed.

In an embodiment of the present application, an access network device to which a source cell belongs obtains information of candidate cells from the second access network device, such that the access network device to which the source cell belongs can derive, based on the information of the candidate cells obtained from the second access network device, a key for a next handover of the terminal device, and can send the key to the candidate access network device. In the foregoing manner, in a subsequent handover, the access network device to which the target cell belongs can be enabled to obtain a key consistent with that of the terminal device, thereby facilitating the terminal device and the target cell in correctly performing decryption or correctly completing message integrity verification.

In addition, in the present application, after sending the key to the candidate access network device, the access network device to which the source cell belongs indicates to the terminal device, by using the first message, that key notification between access network devices has been completed, such that the terminal device can determine, by using the first message, that the access network device to which the target cell belongs has obtained (or is about to obtain) a key for a next handover, thereby facilitating the terminal device and the target cell to communicate based on a same key, and improving communication security.

In a possible design, the first message comprises second information, wherein the second information is used to indicate that key notification to the candidate access network device has been completed. In the foregoing manner, the second information can explicitly indicate that key notification to the candidate access network device has been completed.

In a possible design, the first message comprises second information and third information, wherein the second information is used to indicate that key notification to the candidate access network device has been completed, and the third information is used to indicate a parameter related to key update. In the foregoing design, by carrying the third information, the terminal device is facilitated in deriving a key, thereby further facilitating the terminal device and the target cell to communicate based on a same key, thereby improving communication security.

In a possible design, the first message comprises third information, the third information being used to indicate a parameter related to key update. In the foregoing design, by carrying the third information, the terminal device is facilitated in deriving a key, thereby further facilitating the terminal device and the target cell to communicate based on a same key, thereby improving communication security. Furthermore, the third information can implicitly indicate that key notification to the candidate access network device has been completed, thereby saving signaling overhead.

In a possible design, the third information comprises at least one of: a next hop chaining count, or a key set change indicator.

In a possible design, the information of the at least one candidate cell comprises at least one of: a cell global identifier of the at least one candidate cell, a physical cell identifier of the at least one candidate cell, or downlink frequency information of the at least one candidate cell.

According to a third aspect, a communication method is provided, where an execution body of the method may be an access network device, or a chip, a chip system, or a circuit for an access network device. The method may be implemented by the following step: sending first information to a first access network device, the first information comprising information of at least one candidate cell of a terminal device.

In an embodiment of the present application, an access network device historically accessed by the terminal device sends information of candidate cells of the terminal device to a candidate access network device (such as the first access network device), such that in a subsequent handover, an access network device to which a source cell belongs (which is one of the candidate access network devices and is, in the present application, the first access network device) can derive a key for a next handover of the terminal device based on the obtained information of the candidate cells.

In a possible design, the information of the at least one candidate cell comprises at least one of: a cell global identifier of the at least one candidate cell, a physical cell identifier of the at least one candidate cell, or downlink frequency information of the at least one candidate cell.

According to a fourth aspect, a communication method is provided, where an execution body of the method may be a terminal device, or a chip, a chip system, or a circuit for a terminal device. The method may be implemented by the following steps: determining that a trigger condition for a target cell is satisfied; and sending first information and second information to a first access network device to which the target cell belongs, wherein the first information is used to access the target cell, and the second information is used by the first access network device to obtain a key from a second access network device, wherein the second access network device is an access network device to which a source cell of the terminal device belongs.

In an embodiment of the present application, the terminal device sends, to the access network device to which the target cell belongs, related information of the source cell/terminal device (that is, the foregoing second information), such that the access network device to which the target cell belongs can determine the access network device to which the source cell belongs, and can thereby trigger the access network device to which the target cell belongs to request a key from the access network device to which the source cell belongs, which facilitates the terminal device and the target cell in correctly performing decryption or correctly completing message integrity verification.

In addition, the terminal device can trigger, by using the second information, the access network device to which the target cell belongs to request a key from the access network device to which the source cell belongs in a timely manner, such that subsequent communication between the terminal device and the target cell is performed based on a same key, and communication security can be improved.

In a possible design, the second information comprises at least one of: information of the source cell, or information of the terminal device. In this manner, the access network device to which the target cell belongs can be enabled to determine the access network device to which the source cell belongs.

In a possible design, the information of the source cell comprises an identifier of the source cell.

In a possible design, the information of the terminal device comprises an identifier of the terminal device.

In a possible design, the first information is not encrypted and/or has not been subjected to integrity protection processing. In this manner, the first access network device can be enabled to correctly obtain content of the first information, which facilitates subsequent key alignment and the achievement of secure communication.

In a possible design, the method further comprises: receiving third information from the first access network device, the third information being used to indicate a parameter related to key update; determining a key of the target cell based on the third information; and communicating with the target cell based on the key of the target cell. With the foregoing design, a rule by which the terminal device derives a key can be made consistent with a rule by which the access network device to which the source cell belongs derives a key, thereby further facilitating the terminal device and the target cell to communicate based on a same key, thereby improving communication security.

In a possible design, the third information comprises at least one of: a next hop chaining count, or a key set change indicator.

In a possible design, the method further comprises: determining a key of the target cell by using a horizontal derivation manner; and communicating with the target cell based on the key of the target cell. In the foregoing manner, if a horizontal derivation manner is used to derive a key, the first access network device may not need to send a parameter related to key update (that is, the third information) to the terminal device, thereby saving signaling overhead.

In a possible design, the method further comprises: in a case where channel quality of the serving cell is less than or equal to a threshold, determining to send the first information and the second information after the trigger condition for the target cell is satisfied.

In the foregoing design, when the channel quality of the serving cell is relatively poor, performing handover first and triggering the access network device to which the target cell belongs to request a key can reduce as much as possible an impact of cell handover on terminal device communication.

In a possible design, the method further comprises: receiving a first message, the first message being used to configure the trigger condition for the target cell.

According to a fifth aspect, a communication method is provided, where an execution body of the method may be an access network device, or a chip, a chip system, or a circuit for an access network device. The method may be implemented by the following steps: receiving first information and second information from a terminal device, and sending a request message to a second access network device, wherein the first information is used to access a target cell, the second information is used by the first access network device to obtain a key from the second access network device, the second access network device is an access network device to which a source cell of the terminal device belongs, the request message is used to request a key, and the request message carries fourth information, the fourth information being used to determine the terminal device; and a key of the target cell of the terminal device can be obtained by receiving a response message of the request message, wherein the target cell is one of candidate cells managed by the first access network device.

In an embodiment of the present application, the access network device to which the target cell belongs can determine, based on related information of the source cell/terminal device (that is, the foregoing second information), the access network device to which the source cell belongs, and can thereby request a key from the access network device to which the source cell belongs. In the foregoing manner, in a subsequent handover, the access network device to which the target cell belongs can proactively obtain a key consistent with that of the terminal device, thereby facilitating the terminal device and the target cell in correctly performing decryption or correctly completing message integrity verification.

In addition, under the trigger of the second information, the access network device to which the target cell belongs can request a key from the access network device to which the source cell belongs in a timely manner, such that subsequent communication between the terminal device and the target cell is performed based on a same key, and communication security can be improved.

In a possible design, the second information comprises at least one of: information of the source cell, or information of the terminal device. In this manner, the access network device to which the target cell belongs can be enabled to determine the access network device to which the source cell belongs.

In a possible design, the information of the source cell comprises an identifier of the source cell.

In a possible design, the information of the terminal device comprises an identifier of the terminal device.

In a possible design, the first information is not encrypted and/or has not been subjected to integrity protection processing. In this manner, the first access network device can be enabled to correctly obtain content of the first information, which facilitates subsequent key alignment and the achievement of secure communication.

In a possible design, the response message further carries third information, the third information being used to indicate a parameter related to key update; and the method further comprises: sending the third information to the terminal device; and communicating with the terminal device based on the key of the target cell. With the foregoing design, a rule by which the terminal device derives a key can be made consistent with a rule by which the access network device to which the source cell belongs derives a key, thereby further facilitating the terminal device and the target cell to communicate based on a same key, thereby improving communication security.

In a possible design, the third information comprises at least one of: a next hop chaining count, or a key set change indicator.

According to a sixth aspect, a communication method is provided, where an execution body of the method may be an access network device, or a chip, a chip system, or a circuit for an access network device. The method may be implemented by the following steps: after receiving, from a first access network device, a request message for requesting a key, determining a key of a target cell of a terminal device based on fourth information carried in the request message, and sending the key of the target cell to the first access network device by using a response message of the request message; wherein the fourth information is used to determine the terminal device; and wherein the target cell is one of candidate cells managed by the first access network device.

In an embodiment of the present application, the access network device to which the source cell belongs can determine the terminal device based on related information of the source cell/terminal device (that is, the foregoing fourth information), and can thereby derive a key for a next handover of the terminal device. In the foregoing manner, in a subsequent handover, the access network device to which the target cell belongs can obtain a key consistent with that of the terminal device, thereby facilitating the terminal device and the target cell in correctly performing decryption or correctly completing message integrity verification.

In a possible design, the fourth information comprises at least one of: information of a source cell of the terminal device, or information of the terminal device, wherein the source cell is one of cells managed by the second access network device. In this manner, the access network device to which the source cell belongs can be enabled to determine the terminal device.

In a possible design, the information of the source cell comprises an identifier of the source cell.

In a possible design, the information of the terminal device comprises an identifier of the terminal device.

In a possible design, the determining a key of a target cell of a terminal device based on fourth information comprises: determining a next hop parameter based on the fourth information, and determining the key of the target cell based on the next hop parameter.

In a possible design, the response message further carries third information, the third information being used to indicate a parameter related to key update. With the foregoing design, a rule by which the terminal device derives a key can be made consistent with a rule by which the access network device to which the source cell belongs derives a key, thereby further facilitating the terminal device and the target cell to communicate based on a same key, thereby improving communication security.

In a possible design, the third information comprises at least one of: a next hop chaining count, or a key set change indicator.

In a possible design, the determining a key of a target cell of a terminal device based on fourth information comprises: determining a key of the source cell of the terminal device based on the fourth information; and determining the key of the target cell based on the key of the source cell of the terminal device by using a horizontal derivation manner. In the foregoing manner, if a horizontal derivation manner is used to derive a key, the first access network device may not need to send a parameter related to key update (that is, the third information) to the terminal device, thereby saving signaling overhead.

According to a seventh aspect, the present application further provides a communication apparatus, where the apparatus is a terminal device or a chip in a terminal device. The communication apparatus has a function of implementing any one of the methods provided in the foregoing first aspect or fourth aspect. The communication apparatus may be implemented by hardware, or may be implemented by hardware executing corresponding software. The hardware or software comprises one or more units or modules corresponding to the foregoing function.

In a possible design, the communication apparatus comprises: a processor, wherein the processor is configured to support the communication apparatus in performing a corresponding function of the terminal device in the methods shown above. The communication apparatus may further comprise a memory, wherein the memory may be coupled to the processor and stores program instructions and data necessary for the communication apparatus. Optionally, the communication apparatus further comprises an interface circuit, wherein the interface circuit is configured to support communication between the communication apparatus and a device such as an access network device, for example, transmitting and receiving data or signals. By way of example, the communication interface may be a transceiver, a circuit, a bus, a module, or another type of communication interface.

In a possible design, the communication apparatus comprises corresponding functional modules, which are respectively configured to implement the steps in the foregoing methods. The functions may be implemented by hardware, or may be implemented by hardware executing corresponding software. The hardware or software comprises one or more modules corresponding to the foregoing functions.

In a possible design, a structure of the communication apparatus comprises a processing unit (or a processing module) and a communication unit (or a communication module), wherein these units can perform corresponding functions in the foregoing method examples. For specifics, reference may be made to the descriptions in the methods provided in the first aspect or the fourth aspect, and details are not described herein again.

According to an eighth aspect, the present application further provides a communication apparatus, where the apparatus is an access network device or a chip in an access network device. The communication apparatus has a function of implementing any one of the methods provided in the foregoing second aspect, third aspect, fifth aspect, or sixth aspect. The communication apparatus may be implemented by hardware, or may be implemented by hardware executing corresponding software. The hardware or software comprises one or more units or modules corresponding to the foregoing function.

In a possible design, the communication apparatus comprises: a processor, wherein the processor is configured to support the communication apparatus in performing a corresponding function of the access network device in the methods shown above. The communication apparatus may further comprise a memory, wherein the memory may be coupled to the processor and stores program instructions and data necessary for the communication apparatus. Optionally, the communication apparatus further comprises an interface circuit, wherein the interface circuit is configured to support communication between the communication apparatus and a device such as a terminal device, for example, transmitting and receiving data or signals. By way of example, the communication interface may be a transceiver, a circuit, a bus, a module, or another type of communication interface.

In a possible design, the communication apparatus comprises corresponding functional modules, which are respectively configured to implement the steps in the foregoing methods. The functions may be implemented by hardware, or may be implemented by hardware executing corresponding software. The hardware or software comprises one or more modules corresponding to the foregoing functions.

In a possible design, a structure of the communication apparatus comprises a processing unit (or a processing module) and a communication unit (or a communication module), wherein these units can perform corresponding functions in the foregoing method examples. For specifics, reference may be made to the descriptions in the methods provided in the second aspect, the third aspect, the fifth aspect, or the sixth aspect, and details are not described herein again.

According to a ninth aspect, a communication apparatus is provided, comprising a processor and an interface circuit, wherein the interface circuit is configured to receive a signal from another communication apparatus other than the communication apparatus and transmit the signal to the processor, or to send a signal from the processor to another communication apparatus other than the communication apparatus; and wherein the processor is configured to implement, by using a logic circuit or by executing code instructions, the method in the foregoing first aspect or fourth aspect and any possible design thereof.

According to a tenth aspect, a communication apparatus is provided, comprising a processor and an interface circuit, wherein the interface circuit is configured to receive a signal from another communication apparatus other than the communication apparatus and transmit the signal to the processor, or to send a signal from the processor to another communication apparatus other than the communication apparatus; and wherein the processor is configured to implement, by using a logic circuit or by executing code instructions, the method in the foregoing second aspect, third aspect, fifth aspect, or sixth aspect and any possible design thereof.

According to an eleventh aspect, a computer-readable storage medium is provided, wherein the computer-readable storage medium stores a computer program or instructions, and the computer program or instructions, when executed by a processor, implement the method in any one of the foregoing first aspect to sixth aspect and any possible design thereof.

According to a twelfth aspect, a computer program product storing instructions is provided, wherein the instructions, when run by a processor, implement the method in any one of the foregoing first aspect to sixth aspect and any possible design thereof.

According to a thirteenth aspect, a chip system is provided, wherein the chip system comprises a processor and may further comprise a memory, and is configured to implement the method in any one of the foregoing first aspect to sixth aspect and any possible design thereof. The chip system may consist of a chip, or may comprise a chip and other discrete components.

According to a fourteenth aspect, a communication system is provided, wherein the system comprises the apparatus described in the first aspect (such as a terminal device), the apparatus described in the second aspect (such as an access network device), and the apparatus described in the third aspect (such as an access network device).

According to a fifteenth aspect, a communication system is provided, wherein the system comprises the apparatus described in the fourth aspect (such as a terminal device), the apparatus described in the fifth aspect (such as an access network device), and the apparatus described in the sixth aspect (such as an access network device).

For technical effects that can be achieved by the technical solution of any one of the foregoing seventh aspect to fifteenth aspect, reference may be made to the descriptions of the technical effects that can be achieved by the technical solutions of the foregoing first aspect to sixth aspect, and repeated descriptions are omitted.

### BRIEF DESCRIPTION OF DRAWINGS

FIG. 1 is a schematic flowchart of a cell handover according to an embodiment of the present application;
FIG. 2 is a schematic architectural diagram of a communication system according to an embodiment of the present application;
FIG. 3 is a schematic structural diagram of an access network device according to an embodiment of the present application;
FIG. 4 is a schematic diagram of a communication method according to an embodiment of the present application;
FIG. 5 is a schematic flowchart of a cell handover according to an embodiment of the present application;
FIG. 6 is a schematic flowchart of a cell handover according to an embodiment of the present application;
FIG. 7 is a schematic diagram of a communication method according to an embodiment of the present application;
FIG. 8 is a schematic flowchart of a cell handover according to an embodiment of the present application;
FIG. 9 is a schematic flowchart of a cell handover according to an embodiment of the present application;
FIG. 10 is a schematic structural diagram of a communication apparatus according to an embodiment of the present application; and
FIG. 11 is a schematic structural diagram of a communication apparatus according to an embodiment of the present application.

### DETAILED DESCRIPTION OF EMBODIMENTS

For a better understanding of the solutions of the embodiments of the present application, application scenarios of the embodiments of the present application and existing problems are first introduced below. It should be noted that the application scenarios are intended to make the embodiments of the present application easier to understand, and shall not be regarded as a limitation on the scope of protection claimed by the present application.

In a mobile communication system, due to a change in a position of a terminal device, a communication link between the terminal device and an access network device changes, and the terminal device needs to perform cell handover or access network device handover. When access network device handover occurs, the terminal device typically needs to perform key change; that is, when communicating with a source access network device and a target access network device, different keys are used to perform processing such as encryption and integrity protection on data, so as to achieve secure communication.

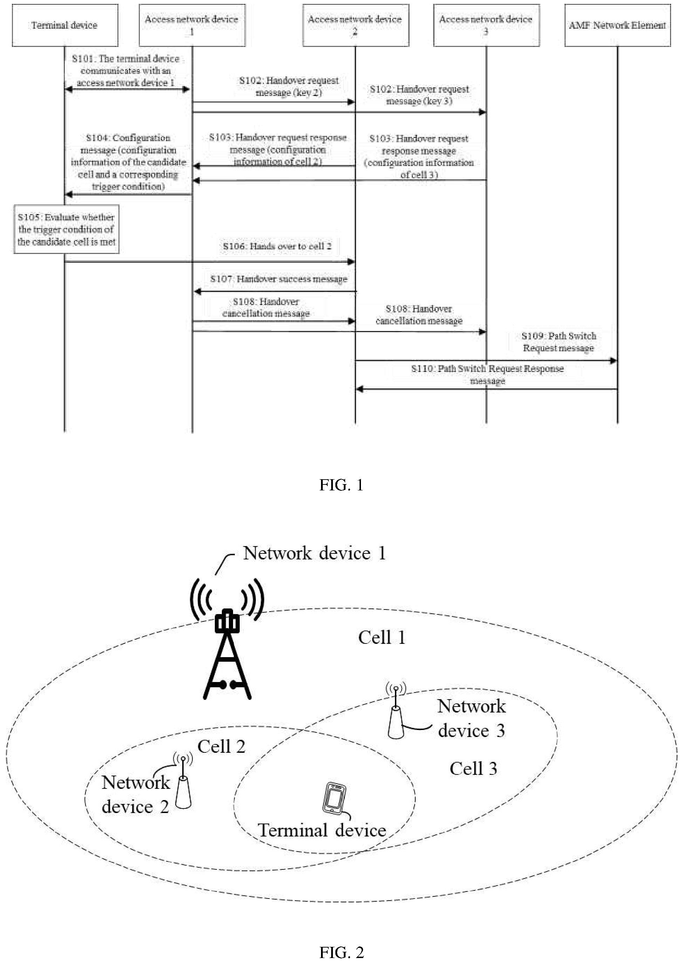

Assume that a communication system comprises access network device 1 to access network device 3. A mobility handover procedure triggered by a terminal device may be as shown in FIG. 1 and comprises:
S101: A terminal device communicates with access network device 1.

A serving cell/source cell of the terminal device is cell (cell) 1, which is managed by access network device 1. The terminal device uses Key1 to perform processing such as encryption and integrity protection on communication data and signaling.

S102: Access network device 1 sends a handover request message to access network device 2 and access network device 3 respectively.

The handover request message sent by access network device 1 to access network device 2 carries key 2, and key 2 is used by the terminal device to communicate with access network device 2. The handover request message sent by access network device 1 to access network device 3 carries key 3, and key 3 is used by the terminal device to communicate with access network device 3.

Both key 2 and key 3 are derived by access network device 1 based on Key1 or a next hop parameter (next hop parameter, NH) 1. NH 1 is provided to access network device 1 by an access and mobility management function (access and mobility management function, AMF) network element, and is used by access network device 1 to derive a key of a target cell.

S103: Access network device 2 and access network device 3 send a handover request response message to access network device 1.

The handover request response message carries configuration information of candidate cell(s).

Assume that a candidate cell managed by access network device 2 is cell 2, and a candidate cell managed by access network device 3 is cell 3. The handover request response message sent by access network device 2 to access network device 1 carries configuration information of cell 2, and the handover request response message sent by access network device 3 to access network device 1 carries configuration information of cell 3.

By way of example, the configuration information of a cell may comprise a physical cell identifier (physical cell ID, PCI) of the cell, and downlink frequency information of the cell, such as an absolute radio frequency channel number - downlink (absolute radio frequency channel number - downlink, ARFCN-DL).

The configuration information of a cell may further comprise an uplink physical channel configuration, a downlink physical channel configuration, and the like, that need to be used when a terminal device accesses the cell.

S104: Access network device 1 sends a configuration message to the terminal device.

The configuration message carries the foregoing configuration information of the candidate cells and corresponding trigger condition. The configuration message further carries a next hop chaining count (next hop chaining count, NCC) 1. NCC 1 is provided to access network device 1 by the AMF network element, and is used by the terminal device to derive the key of the target cell.

S105: The terminal device evaluates whether the trigger condition of the candidate cell is satisfied.

Assume that the terminal device determines that the trigger condition of cell 2 is satisfied.

S106: The terminal device hands over to cell 2.

The terminal device may derive Key 2 based on Key 1 or NCC 1.

S107: Access network device 2 sends a handover success message to access network device 1.

S108: Access network device 1 sends a handover cancellation message to access network device 2 and access network device 3.

S109: Access network device 2 sends a path switch request message to the AMF network element.

The path switch request message is used to request a core network to switch a downlink path from access network device 1 to access network device 2.

S110: The AMF network element sends a path switch request response message to access network device 2.

The path switch request response message is used to respond as to whether the path switch is successful.

Optionally, the path switch request response message may comprise NH 2 and NCC 2. NH 2 is used by access network device 2 to derive a new key in a next handover; NCC 2 is used by the terminal device to derive a new key in the next handover.

Through the foregoing process, handover of the terminal device from cell 1 managed by access network device 1 to cell 2 managed by access network device 2 is completed. The foregoing handover process may be understood as one handover process.

Currently, after successfully handing over to cell 2, the terminal device releases the configuration information of other candidate cells. If the terminal device needs to perform a next handover (for example, hand over from cell 2 to cell 3), the foregoing handover procedure needs to be re-performed.

However, as the terminal device continuously moves, the terminal device may trigger multiple handovers within a short time interval, and using the foregoing handover manner will result in a certain handover latency. To address this problem, a possible solution is that, after performing one cell handover (for example, the foregoing successful handover to cell 2), the terminal device may not release the configuration information of other candidate cells, so as to continue evaluating, based on the configuration information of the other candidate cells, whether the trigger condition of the candidate cell is satisfied, and then perform handover. That is, in a subsequent handover, the terminal device may not perform the foregoing processes of S101 to S104. For example, after the foregoing S110, the following handover process may be performed:
S111: The terminal device evaluates whether the trigger condition of the candidate cell is satisfied.

Assume that the terminal device determines that the trigger condition of cell 3 is satisfied.

S112: The terminal device hands over to cell 3.

The terminal device may derive Key 3' based on Key 2 or NCC 2.

Through the foregoing process, there is a problem that the keys of the terminal device and the target cell in the subsequent handover are not aligned. For example, the key received by access network device 3 is Key 3 sent by access network device 1, and Key 3 is derived by the access network device based on Key 1 or NH 1. Therefore, Key 3 is different from Key 3', and the terminal device and access network device 3 cannot perform normal decryption or normal message integrity verification, resulting in communication failure.

Based on this, embodiments of the present application provide a communication method and apparatus, configured to solve the problem that during a subsequent handover or multiple handovers, the key of a terminal device and the key of an access network device are not aligned, resulting in communication failure. The method and the apparatus are based on a same concept; since the method and the apparatus have similar principles for solving the problem, implementations of the apparatus and the method may be cross-referenced, and repeated descriptions are omitted.

The communication method provided by the present application may be applied to various communication systems, for example, the internet of things (internet of things, IoT), narrow band internet of things (narrow band internet of things, NB-IoT), long term evolution (long term evolution, LTE), a fifth generation (5G) communication system, an LTE-and-5G hybrid architecture, a 5G new radio (new radio, NR) system, 6G, or a new communication system that emerges in future communication development. The communication system described in the present application may also be a machine to machine (machine to machine, M2M) network, a non-terrestrial network (non-terrestrial network, NTN), or another network. The technical solutions of the embodiments of the present application may be employed as long as there is a cell handover requirement in the communication system.

Referring to FIG. 2, which is a schematic architectural diagram of a communication system provided by an embodiment of the present application. As shown in FIG. 2, the communication system comprises an access network device and a terminal device.

The access network device may be a base station (base station), an evolved Node B (evolved nodeB, eNodeB), a transmission reception point (transmission reception point, TRP), a next generation Node B (next generation NodeB, gNB) in a fifth generation (fifth generation, 5G) mobile communication system, a next generation Node B in a sixth generation (6th generation, 6G) mobile communication system, a base station in a future mobile communication system, or an access node in a WiFi system, or the like; the access network device may also be a module or a unit that performs some functions of a base station, for example, may be a central unit (central unit, CU), or may be a distributed unit (distributed unit, DU). The CU herein performs functions of a radio resource control (radio resource control, RRC) protocol and a packet data convergence protocol (packet data convergence protocol, PDCP) of the base station, and may further perform functions of a service data adaptation protocol (service data adaptation protocol, SDAP); the DU performs functions of a radio link control (radio link control, RLC) layer and a medium access control (medium access control, MAC) layer of the base station, and may further perform some functions or all functions of a physical (physical, PHY) layer. For specific descriptions of the foregoing protocol layers, reference may be made to relevant technical specifications of the 3rd Generation Partnership Project (3rd generation partnership project, 3GPP). The access network device may be a macro base station, a micro base station, or an indoor base station, and may also be a relay node, a donor node, or the like. The embodiments of the present application do not limit the specific technology and the specific device form adopted by the access network device.

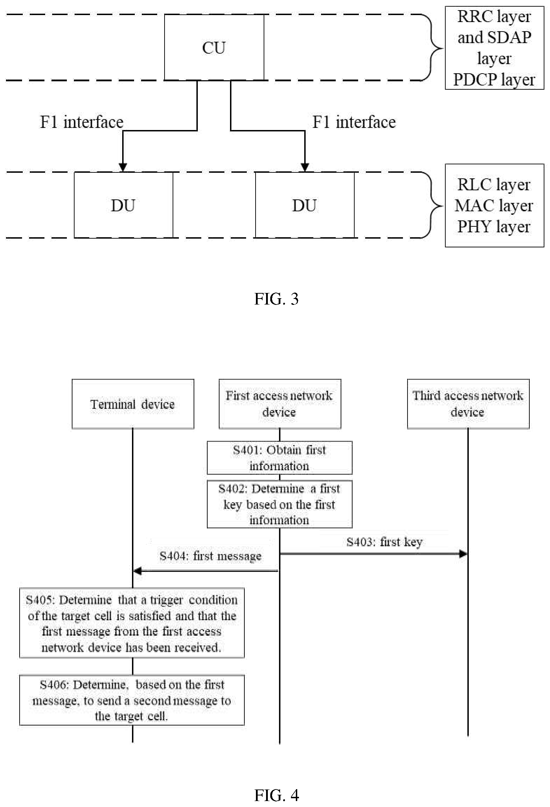

In an embodiment of the present application, the access network device may adopt a CU-DU separation architecture, which may also be referred to as a distributed deployment architecture. For example, referring to FIG. 3, which is a schematic diagram of a CU-DU separation architecture adopted by an access network device provided by an embodiment of the present application. As shown in FIG. 3, the access network device may logically comprise one CU and one or more DUs, where each DU may be connected to the CU through an F1 interface, and information exchange between different DUs may be performed based on forwarding by the CU. The CU and the DU may be physically arranged together, or may be physically arranged separately, without limitation. The CU may support functions of RRC, PDCP, and SDAP; the DU may support functions of an RLC layer protocol, a MAC layer protocol, and a PHY layer protocol.

A terminal device may also be referred to as a terminal, a user equipment (user equipment, UE), a mobile station, a mobile terminal, or the like. The terminal device may be widely used in various scenarios, for example, device-to-device (device-to-device, D2D) communication, vehicle-to-everything (vehicle to everything, V2X) communication, machine-type communication (machine-type communication, MTC), internet of things (internet of things, IoT), virtual reality, augmented reality, industrial control, autonomous driving, telemedicine, smart grid, smart furniture, smart office, smart wearable, smart transportation, smart city, and the like. The terminal device may be a mobile phone, a tablet computer, a computer with a wireless transceiver function, a wearable device, a vehicle, a drone, a helicopter, an aircraft, a ship, a robot, a robotic arm, a smart home device, or the like. The embodiments of the present application do not limit the specific technology and the specific device form adopted by the terminal device.

In an embodiment of the present application, the access network device and the terminal device may be at fixed locations, or may be movable. The access network device and the terminal device may be deployed on land, including indoors or outdoors, handheld or vehicle-mounted; may also be deployed on water; and may also be deployed in the air on an aircraft, a balloon, or an artificial satellite. The embodiments of the present application do not limit application scenarios of the access network device and the terminal device.

The roles of the access network device and the terminal device may be relative. For example, a drone may be configured as a mobile access network device; for terminal devices that access a network through the drone, the drone is an access network device; however, for an access network device that the drone accesses, the drone is a terminal device.

The functions of the access network device may also be performed by a module (such as a chip) in the access network device, or may be performed by a control subsystem that comprises the functions of the access network device. The control subsystem comprising the functions of the access network device herein may be a control center in the foregoing application scenarios such as smart grid, industrial control, smart transportation, or smart city. The functions of the terminal device may also be performed by a module (such as a chip or a modem) in the terminal device, or may be performed by an apparatus that comprises the functions of the terminal device.

In an embodiment of the present application, that the terminal device communicates with the access network device means that the terminal device sends an uplink signal or uplink information to the access network device, where the uplink information is carried on an uplink channel, and/or that the access network device sends a downlink signal or downlink information to the terminal device, where the downlink information is carried on a downlink channel. In order to communicate with the access network device, the terminal device needs to establish a wireless connection with a cell controlled by the access network device (that is, the terminal device camps on the cell controlled by the access network device). A cell with which the terminal device establishes a wireless connection is referred to as a serving cell of the terminal device (that is, a cell that serves the terminal device).

The terminal device may be located within coverage of one or more cells (carriers), and one or more cells may serve the terminal device. For example, in the scenario shown in FIG. 2, the terminal device is simultaneously located within the coverage of cell 1 controlled by access network device 1, cell 2 controlled by access network device 2, and cell 3 controlled by access network device 3, and cell 1, cell 2, and cell 3 may all serve the terminal device. It should be noted that FIG. 2 takes as an example a case where one access network device controls only one cell; in practical applications, one access network device may simultaneously control a plurality of cells. When a plurality of cells serve the terminal device, the terminal device may operate in a manner of carrier aggregation (carrier aggregation, CA), dual connectivity (dual connectivity, DC), or coordinated multi-point transmission/reception (coordinated multiple points transmission/reception, CoMP), and the one or more cells may provide the terminal device with one or more of operations such as radio resources corresponding to more than one transmission parameter set.

Due to mobility of the terminal device and/or a change in channel conditions of cells, the terminal device may switch its serving cell. The serving cell originally camped on by the terminal device (or, the cell from which the terminal device disconnects the wireless connection, or the cell that the terminal device hands over from) is referred to as a source cell, and the cell newly camped on by the terminal device (or, the cell with which the terminal device newly establishes a wireless connection, or the cell that the terminal device hands over to) is referred to as a target cell; that is, that the terminal device switches the serving cell means that the terminal device hands over from the source cell to the target cell. The terminal device may camp on only one cell or may camp on a plurality of cells simultaneously, and the plurality of cells may be controlled by a same access network device, or may be controlled by different access network devices, which is not limited in the embodiments of the present application. Correspondingly, when the terminal device performs serving cell handover, the terminal device may switch only one serving cell, or may simultaneously switch a plurality of serving cells, which is not limited in the embodiments of the present application.

In addition, that a cell communicates with the terminal device (for example, the cell sends a downlink signal to the terminal device, and/or the cell receives an uplink signal from the terminal device) means that the access network device to which the cell belongs (such as the base station controlling the cell) communicates with the terminal device. Communication between cells, for example, communication between one cell and another cell: where, if the two cells respectively belong to different access network devices (such as two cells respectively controlled by different base stations), it means that the access network device to which the one cell belongs communicates with the access network device to which the other cell belongs (such as two access network devices transmitting messages); and where, if the two cells belong to a same access network device (such as two cells controlled by a same base station), it means that a functional module in the access network device that controls the one cell and a functional module in the access network device that controls the other cell perform signaling or data interaction inside the access network device.

The network architecture and the service scenarios described in the embodiments of the present application are intended to more clearly illustrate the technical solutions of the embodiments of the present application, and do not constitute a limitation on the technical solutions provided by the embodiments of the present application. A person of ordinary skill in the art may understand that, with evolution of the network architecture and emergence of new service scenarios, the technical solutions provided by the embodiments of the present application are equally applicable to similar technical problems.

The following clearly and completely describes the technical solutions in the embodiments of the present application with reference to the accompanying drawings in the embodiments of the present application. The terms used in the following embodiments are merely for the purpose of describing specific embodiments and are not intended as a limitation on the present application.

References to "one embodiment" or "some embodiments" or the like described in this specification mean that one or more embodiments of the present application include a specific feature, structure, or characteristic described in connection with the embodiment. The terms "include", "comprise", "have", and variations thereof referred to in the present application all mean "including but not limited to", unless otherwise specifically emphasized in another manner. Terms such as "exemplary" or "for example" are used to represent an example, an illustration, or a description, and any embodiment or design described as "exemplary" or "for example" shall not be construed as being more preferred or more advantageous than other embodiments or designs. The use of terms such as "exemplary" or "for example" is intended to present related concepts in a specific manner for ease of understanding.

The term "a plurality of" referred to in the embodiments of the present application means greater than or equal to two; in view of this, "a plurality of" in the embodiments of the present application may also be understood as "at least two". "At least one" may be understood as one or more, for example, understood as one, two, or more. For example, "comprising at least one" means comprising one, two, or more, without limitation as to which ones are included. For example, "comprising at least one of A, B, and C" may mean comprising A, B, C, A and B, A and C, B and C, or A and B and C. Similarly, descriptions such as "at least one type" are to be understood in a similar manner. "And/or" describes an association relationship between associated objects and indicates that three relationships may exist; for example, "A and/or B" may represent the following three cases: A alone exists, A and B exist simultaneously, and B alone exists. In addition, the character "/", unless otherwise specified, generally represents an "or" relationship between the associated objects before and after.

It should be noted that, unless otherwise stated to the contrary, in the description of the embodiments of the present application, terms such as "first" and "second", or numbers such as "1" and "2", are used only for the purpose of distinguishing descriptions, and shall not be construed as indicating or implying relative importance, nor as indicating or implying an order.

In addition, the term "used to indicate" referred to in the description of the embodiments of the present application may include being used to directly indicate and being used to indirectly indicate. When it is described that certain indication information is used to indicate A, this may include that the indication information directly indicates A or indirectly indicates A, and does not mean that the indication information necessarily carries A.

In the embodiments of the present application, the terms "system" and "network" may be used interchangeably.

The term "handover" referred to in the embodiments of the present application may be understood as updating, replacing, or changing. For example, a path switch of a UE may refer to: after determining a new path of the UE, updating or replacing a source path of the UE with the new path, such that the UE communicates through the new path. Therefore, the term "handover" may also be correspondingly replaced with a term such as "update", which is not limited in the present application.

A trigger condition may also be referred to as a handover trigger condition, a handover condition, or the like. "The trigger condition of cell XX is satisfied" may also be described as "the procedure of performing handover to cell XX is triggered", and so on.

It should be understood that, in the present application, a source cell and a target cell are a relative concept. In one handover, the cell that the terminal device accesses before the handover may be referred to as the source cell, and the cell that the terminal device accesses after the handover may be referred to as the target cell. For example, when the terminal device hands over from cell 1 to cell 2, cell 1 may be understood as the source cell of the current handover, and cell 2 may be understood as the target cell of the current handover. When the terminal device hands over from cell 2 to cell 3, cell 2 may be understood as the source cell of the current handover, and cell 3 may be understood as the target cell of the current handover.

In the present application, the terminal device may trigger multiple handovers within a short time interval, and the multiple handovers may be divided into a first handover and subsequent handovers, wherein the subsequent handovers refer to a second handover and handovers thereafter.

In the present application, "determining a key", "generating a key", and "deriving a key" may be understood as having the same meaning, and may be used interchangeably.

By way of exemplary description, the keys referred to in the present application (such as the first key hereinafter) may be understood as an intermediate parameter, based on which the terminal device may further generate a user plane processing key Kup and an RRC layer processing key Krrc. By way of example, the keys referred to in the present application (such as the first key hereinafter) are also referred to as KgNB, or the like.

For ease of description, the following takes as an example a case where the method is performed by a network device and a terminal device. Referring to FIG. 4, which is a schematic flowchart of a communication method provided by the present application. Assume that the terminal device currently accesses a first access network device; that is, the first access network device is an access network device to which a current serving cell of the terminal device belongs, and an access network device to which a target cell of the handover of the terminal device belongs is a third access network device. The following description takes as an example a procedure of handover from the first access network device to the third access network device.

The method described in FIG. 4 may be applied to a subsequent handover procedure, such as a second handover procedure and subsequent handover procedures. In this scenario, the first access network device is an access network device to which a source cell in the subsequent handover process belongs; that is, the handover of the terminal device from the first access network device to the third access network device is a certain handover among the subsequent handovers.

Alternatively, the method described in FIG. 4 may be applied to any one handover procedure, such as a first handover procedure, a second handover procedure, and subsequent handover procedures. In this scenario, the first access network device may be an access network device to which a source cell in the first handover process belongs; that is, the handover of the terminal device from the first access network device to the third access network device may be the first handover. Alternatively, the first access network device may also be an access network device to which a source cell in a subsequent handover process belongs; that is, the handover of the terminal device from the first access network device to the third access network device is a certain handover among the subsequent handovers.

The method comprises:
S401: The first access network device obtains first information.

The first information comprises information of at least one candidate cell managed by the third access network device. By way of example, the information of the candidate cell comprises at least one of: a cell global identifier (cell global identifier, CGI) of the candidate cell, a PCI of the candidate cell, or downlink frequency information of the candidate cell, such as ARFCN-DL.

The following describes the manner of obtaining the first information in connection with two application scenarios.

Scenario 1: The method described in FIG. 4 is applied to a subsequent handover procedure. The first access network device may obtain the first information in the following manner: a second access network device sends information A to the first access network device. Information A may comprise the first information. Optionally, information A may further comprise information of candidate cell(s) managed by other candidate access network devices, information of candidate cell(s) managed by the first access network device, and the like.

The second access network device may be an access network device historically accessed by the terminal device. For example, the second access network device may be an access network device that the terminal device initially accesses, which may also be understood as an access network device to which a source cell in a first handover process belongs, and may also be understood as an access network device that initially performs handover-related configuration for the terminal device, for example, an access network device that initially configures candidate cell(s) for the terminal device. As another example, the second access network device may be an access network device that the terminal device accessed last time, which may also be understood as an access network device to which a source cell of a last handover belongs.

Optionally, the second access network device may obtain the first information in the following manner: the second access network device sends a handover request message to the third access network device. The third access network device sends a handover request response message to the second access network device, where the handover request response message carries configuration information of the candidate cell(s) managed by the third access network device. By way of example, the configuration information of a cell may comprise at least one of: a CGI, a PCI, or downlink frequency information such as an ARFCN-DL. Optionally, the configuration information of a candidate cell may further comprise an uplink physical channel configuration, a downlink physical channel configuration, and the like, that need to be used when the terminal device accesses the cell.

Optionally, in a scenario such as carrier aggregation, the handover request response message may carry configuration information of a candidate cell group managed by the third access network device, which specifically may comprise configuration information of a candidate primary cell and configuration information of a candidate secondary cell that are managed by the third access network device. In this scenario, the first information may comprise information of the candidate primary cell that corresponds to and is managed by the third access network device.

Alternatively, the second access network device may also obtain the first information through an operation, administration, and maintenance (operation, administration, and maintenance, OAM) function.

It may be understood that the second access network device may also obtain information of candidate cells managed by other candidate access network devices in the foregoing manner.

Scenario 2: The method described in FIG. 4 may be applied to any one handover procedure.

If the first access network device is an access network device to which a source cell in the first handover process belongs, the first access network device may obtain the first information in the following manner: the first access network device sends a handover request message to the third access network device. The third access network device sends a handover request response message to the first access network device, where the handover request response message carries configuration information of the candidate cell(s) managed by the third access network device. For the configuration information of a cell, reference may be made to the foregoing description, and details are not described herein again.

Optionally, in a scenario such as carrier aggregation, the handover request response message may carry information of a candidate cell group managed by the third access network device, which specifically may comprise configuration information of a candidate primary cell and configuration information of a candidate secondary cell that are managed by the third access network device. In this scenario, the first information may comprise the configuration information of the candidate primary cell managed by the third access network device.

Alternatively, the first access network device may also obtain the first information in the following manner: the first access network device obtains the first information through OAM.

If the first access network device is an access network device to which a source cell in a subsequent handover process belongs, for the manner in which the first access network device obtains the first information, reference may be made to the related description in Scenario 1.

S402: The first access network device determines a first key based on the first information.

By way of example, the first access network device may determine the first key based on a key of the first access network device and the first information. This manner may be referred to as a horizontal derivation manner.

Alternatively, the first access network device may also determine the first key based on an NH sent by the AMF network element and the first information. This manner may be referred to as a vertical derivation manner.

In a possible implementation, the first access network device may determine a key derivation manner in the following manner: when the first access network device has an unused pair of parameters {NH, NCC}, the first access network device may determine the first key using the vertical derivation manner; when the first access network device does not have an unused pair of parameters {NH, NCC}, the first access network device may determine the first key using the horizontal derivation manner.

As a possible solution, S402 may be performed under the trigger of the following step: the first access network device determines that the terminal device has handed over to the first access network device. For example, the first access network device receives a path switch request response message from the AMF network element.

As another possible solution, S402 may also be performed under the trigger of the following step: the first access network device receives an NH from the AMF network element.

S403: The first access network device sends the first key to the third access network device. Correspondingly, the third access network device receives the first key from the first access network device.

Optionally, if the second access network device also sends information of candidate cells managed by other candidate access network devices to the first access network device, the first access network device may further determine keys of the other candidate access network devices, and send the keys to the corresponding candidate access network devices.

As an optional step, after receiving the first key, the third access network device may send a response message to the first access network device, where the response message is used to confirm successful receipt of the first key. Further, the first access network device may perform S404 after receiving the response message.

S404: The first access network device sends a first message to the terminal device. Correspondingly, the terminal device receives the first message from the first access network device.

The first message indicates that key notification to the candidate access network device has been completed.

By way of example, the first message may be an RRC message, a medium access control control element (media access control control element, MAC CE), or a layer 1 (layer 1, L1) message, for example, downlink control information (downlink control information, DCI), or another type of downlink message. The present application does not limit the specific form of the first message.

The first message may comprise at least one of: the second information, or the third information. The second information is used to indicate that key notification to the candidate access network device has been completed. The third information is used to indicate a parameter related to key update, for example, a parameter for key update derivation in a next handover. By way of example, the third information comprises at least one of: an NCC for key update derivation in the next handover, or a key set change indicator for key update derivation in the next handover.

It may be understood that, in the foregoing manner in which the first message comprises the third information but does not comprise the second information, the third information may implicitly indicate that key notification to the candidate access network device has been completed.

It should be noted that "the first message indicates that key notification to the candidate access network device has been completed" may also be described as "the first message indicates that a key has been sent to the candidate access network device", "the first message indicates that key update to the candidate access network device has been completed", "the key update and notification procedure between access network devices has been completed", and so on. The present application does not limit the specific meaning indicated by the first message; any message that enables the terminal device to know that the first access network device has sent a key to the candidate access network device may be understood as the first message described in the present application. Similarly, the specific meaning indicated by the second information is not limited; any information that enables the terminal device to know that the first access network device has sent a key to the candidate access network device may be understood as the second information described in the present application.

S405: The terminal device determines that a trigger condition of the target cell is satisfied and that the first message from the first access network device has been received.

The target cell is one of the candidate cells managed by the foregoing third access network device.

In an implementation, the terminal device may determine, by using a measurement result of a reference signal of the target cell, that the trigger condition for the target cell is satisfied.

For a better understanding of S405, four examples of the trigger condition for the target cell are described below.

For example, the trigger condition for the target cell may be that the measurement result of the reference signal of the target cell is higher than the measurement result of the serving cell.

Alternatively, the trigger condition for the target cell may be that the measurement result of the reference signal of the target cell is higher than the measurement result of the serving cell, and a difference between the measurement result of the reference signal of the target cell and the measurement result of the serving cell is greater than a first threshold.

Alternatively, the trigger condition for the target cell may be that the measurement result of the reference signal of the target cell is higher than the measurement result of the serving cell, a difference between the measurement result of the reference signal of the target cell and the measurement result of the serving cell is greater than a first threshold, and a duration is greater than a time threshold.

Alternatively, the trigger condition for the target cell may be that the measurement result of the reference signal of the target cell is greater than a second threshold, the measurement result of the reference signal of the serving cell is less than a third threshold, and the second threshold is greater than the third threshold.

The foregoing measurement result may be a parameter such as reference signal received power (reference signal received power, RSRP), reference signal received quality (reference signal received quality, RSRQ), or signal to interference plus noise ratio (signal to interference plus noise ratio, SINR).

The foregoing trigger conditions are merely exemplary, and the present application does not limit the specific content of the trigger condition.

It may be understood that trigger conditions for other cells hereinafter are similar to the trigger condition for the target cell, and are not described one by one.

As a possible solution, if the terminal device determines that the trigger condition for the target cell is satisfied but the first message has not been received, the terminal device may send a third message to the first access network device, the third message being used to request the first access network device to notify the candidate access network device, such as the third access network device, of a key. In other words, the third message is used to request the first access network device to send the first message to the terminal device.

In an example, the third message may comprise at least one of the following pieces of information: information requesting the first access network device to notify the candidate access network device of a key, or information indicating that the trigger condition for the target cell is satisfied.

In a possible implementation, the terminal device may obtain the trigger condition for the target cell in the following manner: the access network device to which the source cell of the first handover belongs sends configuration information to the terminal device, where the configuration information may comprise the trigger conditions for the candidate cells. Optionally, the configuration information may further comprise the configuration information of the candidate cells, where for the content contained in the configuration information, reference may be made to the description of the configuration information in S401.

S406: The terminal device determines, based on the first message, to send a second message to the target cell.

The second message is used to access the target cell. By way of example, the second message may be a random access preamble; alternatively, the second message may be an uplink message based on uplink configured grant scheduling or pre-configured uplink grant scheduling; alternatively, the second message may also be an uplink message based on dynamic grant scheduling, and so on.

By way of exemplary description, the foregoing "determining, based on the first message, to send the second message to the target cell" may be understood as: when the terminal device evaluates that the trigger condition for the target cell is satisfied, if the terminal device has received the first message, the terminal device performs the handover process to the target cell, for example, sending the second message to the target cell; if the terminal device has not yet received the first message, the terminal device does not perform the handover process to the target cell, until after the terminal device receives the first message, the terminal device starts to perform the handover process to the target cell.

In a possible implementation, the receipt of the first message may be taken as one of the conditions for cell handover; that is, the conditions for the terminal device to perform handover to the target cell comprise condition 1 and condition 2, where condition 1 is the trigger condition for the target cell, and condition 2 is the receipt of the first message. If both condition 1 and condition 2 are satisfied, the terminal device starts to perform the handover process to the target cell. If either of condition 1 and condition 2 is not satisfied or both conditions are not satisfied, the terminal device does not perform the handover process to the target cell.

It should be understood that the present application does not limit the evaluation order of the foregoing condition 1 and condition 2; condition 1 may be evaluated first, and then condition 2 is evaluated when condition 1 is satisfied. Alternatively, condition 2 may be evaluated first, and then condition 1 is evaluated when condition 2 is satisfied. Alternatively, condition 1 and condition 2 may also be evaluated simultaneously.

Optionally, the terminal device may determine, in a case where it is determined that a key needs to be updated for handover to the target cell, to determine to send the second message to the target cell based on the first message; that is, in a case where a key needs to be updated after handover to the target cell, the terminal device determines to wait to receive the first message before performing handover to the target cell.

The foregoing implementation may be understood as: if a key needs to be updated after handover to the target cell, the terminal device determines, based on the first message, to send the second message to the target cell; if a key does not need to be updated after handover to the target cell, the terminal device may start to perform the handover process to the target cell (that is, send the second message to the target cell) after the trigger condition for the target cell is satisfied, without needing to wait to receive the first message.

One example in which a key needs to be updated after handover to the target cell is that the access network device to which the target cell belongs is different from the first access network device.

Another example in which a key needs to be updated after handover to the target cell is that the configuration of the target cell indicates that key update is required.

Yet another example in which a key needs to be updated after handover to the target cell is that a group identifier corresponding to the target cell is different from a group identifier corresponding to the source cell, in which case the terminal device determines that key update is required.

Optionally, after the terminal device accesses the target cell, the terminal device and the target cell may communicate based on the key of the target cell, i.e., the first key, and may use the first key to perform security processing (such as encryption) on data content/signaling content. The terminal device and the first access network device may derive the key of the target cell based on the same rule.

By way of example, if both the terminal device and the first access network device adopt the horizontal derivation manner, the terminal device may derive the key of the target cell based on the key of the first access network device and the information of the target cell. If both the terminal device and the first access network device adopt the vertical derivation manner, the terminal device may derive an NH, and then derive the key of the target cell based on the NH and the information of the target cell.

In a possible implementation, the terminal device may determine the key derivation manner in the following manner: the terminal device may compare the NCC carried in the first message with a stored NCC; if they are the same, the horizontal derivation manner is adopted; if they are different, the vertical derivation manner is adopted.

In an embodiment of the present application, the access network device to which the source cell belongs (for example, the access network device to which the source cell belongs in a subsequent handover) may derive a key of the candidate cell or the target cell based on pre-obtained information of the candidate cells, and notify the access network device to which the candidate cell or the target cell belongs, such that the key obtained by the access network device to which the target cell belongs (for example, the target cell in a subsequent handover) is the same as the key derived by the terminal device, thereby facilitating the terminal device and the target cell to correctly perform decryption or correctly complete message integrity verification when communicating. In addition, by waiting for the first message from the access network device to which the source cell belongs before handing over to the target cell, the terminal device may cause the communication between the terminal device and the target cell to be performed based on the same key, thereby further facilitating the terminal device and the target cell to correctly perform decryption or normally complete message integrity verification.

For ease of understanding, the following takes as an example a case where a communication system comprises access network device 1, access network device 2, and access network device 3, and describes a first handover process and a second handover process in connection with the two scenarios described above. The first handover may be a handover from access network device 1 to access network device 2. The second handover may be a handover from access network device 2 to access network device 3. It should be understood that other handovers may also be performed after the second handover, and for the specific handover manner, reference may be made to the process of the second handover, which is not elaborated herein.

### Embodiment 1:

In this embodiment, the method described in FIG. 4 may be applied to subsequent handovers (the second handover is taken as an example below). In Embodiment 1, access network device 1 may correspond to the foregoing second access network device, access network device 2 corresponds to the foregoing first access network device, and access network device 3 corresponds to the third access network device.

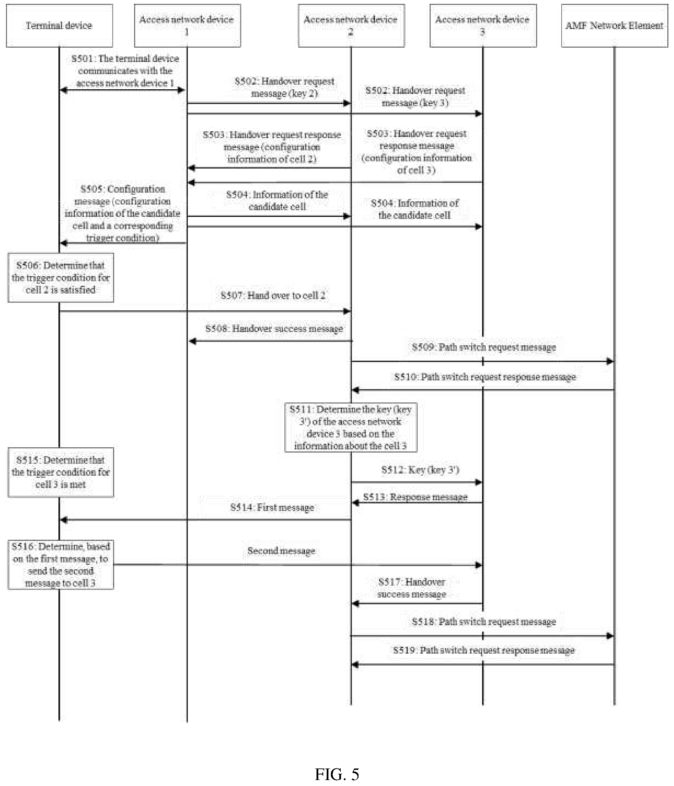

As shown in FIG. 5, the method comprises:
Assume that the terminal device initially accesses access network device 1, and the terminal device may perform the first handover through the following S501 to S510:
S501: The terminal device communicates with access network device 1.
S502: Access network device 1 sends a handover request message to access network device 2 and access network device 3 respectively.
S503: Access network device 2 and access network device 3 send handover request response messages to access network device 1.

It should be noted that S501 to S503 are optional steps.

For specifics of the foregoing S501 to S503, reference may be made to the related descriptions of the foregoing S101 to S103, and details are not described herein again.

S504: Access network device 1 sends information of candidate cells to access network device 2 and access network device 3.

The information of the candidate cells comprises information of cell 2 and information of cell 3. The information of cell 2 comprises at least one of: the CGI of cell 2, the PCI of cell 2, or downlink frequency information of cell 2, such as ARFCN-DL. The information of cell 3 comprises at least one of: the CGI of cell 3, the PCI of cell 3, or downlink frequency information of cell 3, such as ARFCN-DL.

S505: Access network device 1 sends a configuration message to the terminal device.

S506: The terminal device determines that the trigger condition for cell 2 is satisfied.

S507: The terminal device hands over to cell 2.

S508: Access network device 2 sends a handover success message to access network device 1.

S509: Access network device 2 sends a path switch request message to the AMF network element.

S510: The AMF network element sends a path switch request response message to access network device 2.

It should be noted that S505 to S510 are optional steps.

For the foregoing S505 to S508, reference may be made to the related descriptions of the foregoing S104 to S107; and for the foregoing S509 to S510, reference may be made to the related descriptions of the foregoing S109 to S110. Details are not described herein again.

Through the foregoing process, the terminal device hands over from cell 1 managed by access network device 1 to cell 2 managed by access network device 2.

As a possible implementation, after the terminal device hands over to cell 2, the terminal device and cell 2 may communicate based on Key 2. For the manner in which the terminal device generates Key 2, reference may be made to the related description of the foregoing S106, and details are not described herein again.

Thereafter, the terminal device may perform the second handover through the following S511 to S518:
S511: Access network device 2 determines a key of access network device 3, Key 3', based on the information of cell 3.

The information of cell 3 corresponds to the foregoing first information. Key 3' corresponds to the foregoing first key.

For the manner of determining key 3', reference may be made to the related description of S402, and details are not described herein again.

S512: Access network device 2 sends key 3' to access network device 3.

S513: Access network device 3 sends a response message to access network device 2.

The response message is used to confirm successful receipt of key 3'.

It should be noted that S513 is an optional step.

S514: Access network device 2 sends a first message to the terminal device.

For the first message, reference may be made to the related description of S404 throughout the text, and details are not described herein again.

S515: The terminal device determines that the trigger condition for cell 3 is satisfied.

The foregoing cell 3 corresponds to the foregoing target cell.

The present application does not limit the execution order of S514 and S515.

S516: The terminal device determines, based on the first message, to send a second message to cell 3.

For specifics of the foregoing S516, reference may be made to the related description of the foregoing S406, and details are not described herein again.

Optionally, if the terminal device has not received the first message after the trigger condition for cell 3 is satisfied, the terminal device may send a third message to access network device 2, where the third message is used to request access network device 2 to notify the candidate access network devices (that is, access network device 3 and access network device 1) of a key. For specifics of the third message, reference may be made to the related description in the foregoing S405. In other words, the third message is used to request the first access network device to send the first message to the terminal device.

In addition, the terminal device may, in a case where a key needs to be updated after handover to cell 3, determine to send the second message to cell 3 based on the first message; for specifics, reference may be made to the related description of the foregoing S406, and details are not described herein again.

S517: Access network device 3 sends a handover success message to access network device 2.

S518: Access network device 3 sends a path switch request message to the AMF network element.

S519: The AMF network element sends a path switch request response message to access network device 3.

It should be noted that S517 to S519 are optional steps.

For the foregoing S517 to S519, reference may be made to the related descriptions of the foregoing S107 and S109 to S110, and details are not described herein again.

Through the foregoing process, the terminal device hands over from cell 2 managed by access network device 2 to cell 3 managed by access network device 3.

As a possible implementation, after the terminal device hands over to cell 3, the terminal device and cell 3 may communicate based on key 3'. For the manner in which the terminal device generates key 3', reference may be made to the foregoing manner in which the terminal device determines the first key, and details are not described herein again.

It can be seen from the method described in FIG. 5 that the terminal device may perform at least two handovers, and that the first handover and the subsequent handover (such as the second handover) adopt different manners: in the first handover, the terminal device performs the handover after determining that the trigger condition for the target cell is satisfied; whereas in the subsequent handover, the terminal device waits for the first message from the access network device to which the source cell belongs after determining that the trigger condition for the target cell is satisfied, and then performs the handover after receiving the first message. A manner for the terminal device to distinguish between the first handover and the subsequent handover is described below.

In a possible manner, the terminal device may regard the access network device that the terminal device accesses when first receiving the configuration information of the candidate cells as an initial access network device. When the terminal device performs a first cell handover or access network device handover based on the configuration information of the candidate cells, this may be understood as an initial handover or the first handover; when the terminal device performs a second cell handover or access network device handover using the previously provided configuration information of the candidate cells, this may be understood as a second handover or a subsequent handover. Similarly, when a third handover, a fourth handover, or the like is performed using the previously provided configuration information of the candidate cells, this may also be understood as a subsequent handover.

### Embodiment 2:

The difference between Embodiment 2 and Embodiment 1 lies in that the first handover in Embodiment 1 does not adopt the method described in FIG. 4, whereas the first handover in Embodiment 2 may also adopt the method described in FIG. 4. In Embodiment 2, for the first handover, access network device 1 may correspond to the foregoing first access network device, and access network device 2 corresponds to the foregoing third access network device. For the subsequent handover, the second handover is taken as an example below: access network device 1 may correspond to the foregoing second access network device, access network device 2 may correspond to the foregoing first access network device, and access network device 3 corresponds to the foregoing third access network device.

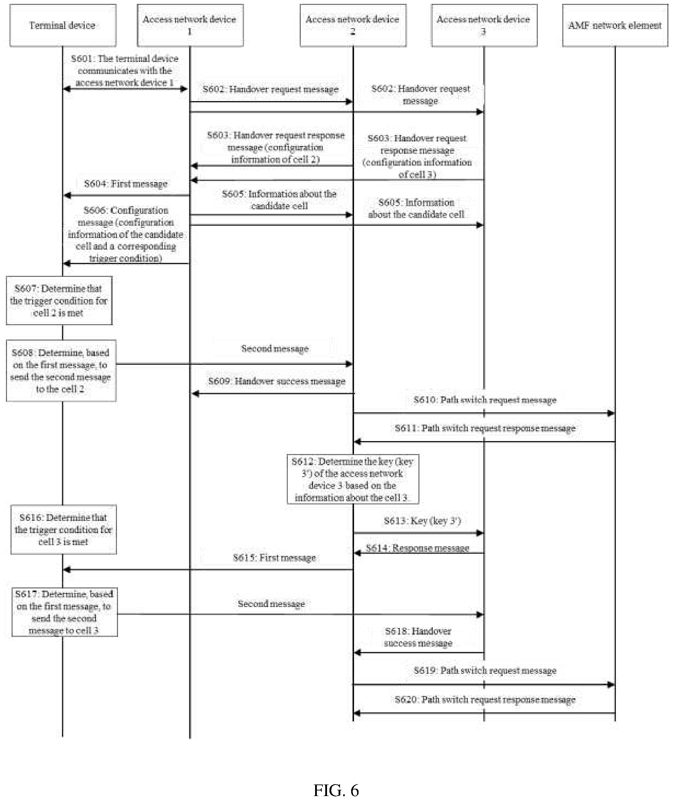

As shown in FIG. 6, the method comprises:
Assume that the terminal device initially accesses access network device 1, and the terminal device may perform the first handover through the following S601 to S611:
S601: The terminal device communicates with access network device 1.
S602: Access network device 1 sends a handover request message to access network device 2 and access network device 3 respectively.

In a possible implementation, the handover request message sent by access network device 1 to access network device 2 may carry a key of access network device 2, key 2. The handover request message sent by access network device 1 to access network device 3 may carry a key of access network device 3, key 3.

In this manner, modifications to the original protocol can be reduced as much as possible, thereby improving forward compatibility.

In another possible implementation, the handover request messages sent by access network device 1 to access network device 2 and access network device 3 may not carry the keys of access network device 2 and access network device 3.

Further, if the handover request messages do not carry the keys of access network device 2 and access network device 3, access network device 1 may send the corresponding keys to access network device 2 and access network device 3 respectively through other messages (such as a key notification message).

In this manner, the access network device to which the source cell belongs in the first handover and in the subsequent handover can adopt the same rule to send handover request messages and notify keys, thereby reducing the processing complexity of the access network device.

S603: Access network device 2 and access network device 3 send handover request response messages to access network device 1.

It should be noted that S601 to S603 are optional steps.

For specifics of the foregoing S601 to S603, reference may be made to the related descriptions of the foregoing S101 to S103, and details are not described herein again.

S604: Access network device 1 sends a first message to the terminal device.

For the first message, reference may be made to the related description of the foregoing S404, and details are not described herein again.

S605: Access network device 1 sends information of candidate cells to access network device 2 and access network device 3.

For specifics, reference may be made to the related description of the foregoing S504.

S606: Access network device 1 sends a configuration message to the terminal device.

For specifics, reference may be made to the related description of the foregoing S104.

S607: The terminal device determines that the trigger condition for cell 2 is satisfied.

For the first handover, cell 3 may correspond to the foregoing target cell.

S608: The terminal device determines, based on the first message, to send a second message to cell 2.

For specifics of the foregoing S608, reference may be made to the related description of the foregoing S406.

Optionally, if the terminal device has not received the first message from access network device 1 after the trigger condition for cell 2 is satisfied, the terminal device may send a third message to access network device 1, where the third message is used to request access network device 1 to notify the candidate access network devices (that is, access network device 2 and access network device 3) of a key. For specifics of the third message, reference may be made to the related description in the foregoing S405.

In addition, the terminal device may, in a case where a key needs to be updated after handover to cell 2, determine to send the second message to cell 2 based on the first message. For specifics, reference may be made to the related description of the foregoing S406, and details are not described herein again.

S609: Access network device 2 sends a handover success message to access network device 1.

S610: Access network device 2 sends a path switch request message to the AMF network element.

S611: The AMF network element sends a path switch request response message to access network device 2.

It should be noted that S609 to S611 are optional steps.

For the foregoing S609 to S611, reference may be made to the related descriptions of the foregoing S107 and S109 to S110, and details are not described herein again.

Through the foregoing process, the terminal device hands over from cell 1 managed by access network device 1 to cell 2 managed by access network device 2.

As a possible implementation, after the terminal device hands over to cell 2, the terminal device and cell 2 may communicate based on key 2. For the manner in which the terminal device generates key 2, reference may be made to the related description of the foregoing S106, and details are not described herein again.

Thereafter, the terminal device may perform the second handover, which specifically comprises steps S612 to S620. For the specific process, reference may be made to the related description regarding the second handover in Embodiment 1, that is, the related descriptions of S511 to S519, and details are not described herein again.

In an embodiment of the present application, the access network device historically accessed by the terminal device (for example, the second access network device) sends information of candidate cells of the terminal device to the candidate access network devices, such that in a subsequent handover, the access network device to which the source cell belongs (which is one of the candidate access network devices and is, in the present application, the first access network device) may derive a key for a next handover of the terminal device based on the information of the candidate cells obtained from the second access network device, and send the key to the access network device to which the target cell belongs (which is one of the candidate access network devices and is, in the present application, the third access network device). In the foregoing manner, the access network device to which the target cell belongs in the subsequent handover can be enabled to obtain a key consistent with that of the terminal device, thereby facilitating the terminal device and the target cell in correctly performing decryption or correctly completing message integrity verification.

In addition, in the present application, after sending the key to the access network device to which the target cell belongs (that is, the third access network device), the first access network device indicates to the terminal device, by using the first message, that key notification between access network devices has been completed, such that the terminal device may determine, by using the first message, that the access network device to which the target cell belongs has obtained (or is about to obtain) a key for a next handover. The terminal device performs cell handover only after receiving the first message, which may cause the communication between the terminal device and the target cell to be performed based on the same key, thereby improving communication security.

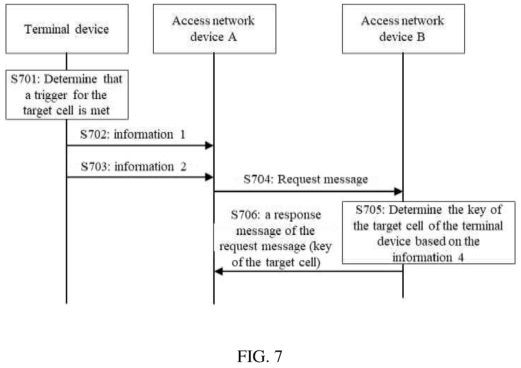

A communication method for the multiple handover communication scenario has been described above. Another communication method for the multiple handover communication scenario is described below, as shown in FIG. 7. Assume that the terminal device currently accesses access network device B; that is, access network device B is an access network device to which a current serving cell of the terminal device belongs, and an access network device to which a target cell of the handover of the terminal device belongs is access network device A. The following description takes as an example a procedure of handover from access network device B to access network device A.

The difference between the method described in FIG. 7 and the method described in FIG. 4 lies in that, in the method described in FIG. 4, the access network device to which the source cell belongs (in particular, the access network device to which the source cell belongs in a subsequent handover) may derive a key of the target cell based on pre-obtained information of candidate cells, and notify the access network device to which the target cell belongs of the key; and the terminal device, before handing over to the target cell, waits for the first message from the access network device to which the source cell belongs. Whereas in the method described in FIG. 7, when handing over to the target cell, the terminal device sends some information to the target cell, such that the target cell can request a key from the source cell based on the information.

The method described in FIG. 7 may be applied to a subsequent handover procedure, such as a second handover procedure and subsequent handover procedures. In this scenario, access network device B is an access network device to which a source cell in the subsequent handover process belongs, and access network device A is an access network device to which a target cell in the subsequent handover process belongs; that is, the handover of the terminal device from access network device B to access network device A is a certain handover among the subsequent handovers.

Alternatively, the method described in FIG. 7 may be applied to any one handover procedure, such as a first handover procedure, a second handover procedure, and subsequent handover procedures. In this scenario, access network device B is an access network device to which a source cell in the first handover process belongs, and access network device A is an access network device to which a target cell in the first handover process belongs; that is, the handover of the terminal device from access network device B to access network device A may be the first handover. Alternatively, access network device B is an access network device to which a source cell in a subsequent handover process belongs, and access network device A is an access network device to which a target cell in the subsequent handover process belongs; that is, the handover of the terminal device from access network device B to access network device A is a certain handover among the subsequent handovers.

As shown in FIG. 7, another communication method for the multiple handover communication scenario comprises:
S701: The terminal device determines that a trigger condition for a target cell is satisfied.

The target cell is one of the candidate cells managed by access network device A. Access network device A corresponds to the first access network device in the fourth aspect to the sixth aspect of the Summary.

In a possible implementation, the terminal device may obtain the trigger condition for the target cell in the following manner: the access network device to which the source cell of the first handover belongs sends configuration information to the terminal device, where the configuration information may comprise configuration information of the candidate cells and corresponding trigger conditions.

S702: The terminal device sends information 1 to access network device A. Correspondingly, access network device A receives information 1 from the terminal device.

Information 1 is used to access the target cell. By way of example, information 1 may be random access information such as a preamble; alternatively, information 1 may be uplink information based on uplink configured grant scheduling or pre-configured uplink grant scheduling; alternatively, information 1 may also be uplink information based on dynamic grant scheduling, and so on. Information 1 corresponds to the first information in the fourth aspect to the sixth aspect of the Summary.

In a possible implementation, information 1 may be unencrypted and/or not subjected to integrity protection processing. In this manner, access network device A can be enabled to correctly obtain the content of information 1, which facilitates subsequent key alignment and the achievement of secure communication.

S703: The terminal device sends information 2 to access network device A. Correspondingly, access network device A receives information 2 from the terminal device.

Information 2 is used by access network device A to obtain a key from access network device B, where access network device B is an access network device to which a source cell of the terminal device belongs. Information 2 corresponds to the second information in the fourth aspect to the sixth aspect of the Summary. Access network device B corresponds to the second access network device in the fourth aspect to the sixth aspect of the Summary.

By way of example, information 2 comprises at least one of: information of the source cell, or information of the terminal device. For example, the information of the source cell may comprise an identifier of the source cell. The information of the terminal device may comprise an identifier of the terminal device.

It should be noted that the present application does not limit the sending order of information 1 and information 2; information 1 may be sent before information 2, information 2 may be sent before information 1, or information 1 and information 2 may also be carried in a same message and sent together.

S704: Access network device A sends a request message to access network device B. Correspondingly, access network device B receives the request message from access network device A.

The request message is used to request a key, and the request message carries information 4, the information 4 being used to determine the terminal device. Information 4 corresponds to the fourth information in the fourth aspect to the sixth aspect of the Summary.

By way of example, information 4 comprises at least one of: information of the source cell, or information of the terminal device.

S705: Access network device B determines a key of the target cell of the terminal device based on information 4.

In a possible implementation, access network device B may determine the key of the target cell by using the vertical derivation manner. For example, the terminal device may be determined based on information 4, and thereby a next hop parameter NH corresponding to the terminal device may be determined, and the key of the target cell may be determined based on the next hop parameter NH.

In an example, when access network device B determines the key of the target cell based on the next hop parameter NH, access network device B may determine the key of the target cell based on the next hop parameter NH and the information of the target cell.

In another possible implementation, access network device B may determine the key of the target cell by using the horizontal derivation manner. For example, the terminal device may be determined based on information 4, a key of the source cell corresponding to the terminal device may further be determined, and the key of the target cell may be determined based on the key of the source cell of the terminal device.

In an example, when access network device B determines the key of the target cell based on the key of the source cell of the terminal device, access network device B may determine the key of the target cell based on the key of the source cell and the information of the target cell.

As an optional solution, access network device B may determine the adopted derivation manner in the following manner: when access network device B has an unused pair of parameters {NH, NCC}, access network device B may use the vertical derivation manner; when access network device B does not have an unused pair of parameters {NH, NCC}, access network device B may use the horizontal derivation manner.

The following describes the manner in which access network device B obtains the information of the target cell in connection with two application scenarios.

Scenario A: The method described in FIG. 7 is applied to a subsequent handover procedure. Access network device B may obtain the information of the target cell in the following manner: access network device C sends information A to access network device B. Information A may comprise information of candidate cells managed by access network device A. Since the candidate cells managed by access network device A comprise the target cell, information A comprises the information of the target cell. Optionally, information A may further comprise information of candidate cells managed by other candidate access network devices, information of candidate cells managed by access network device B, and the like.

For access network device C, reference may be made to the related description of the second access network device in the method described in FIG. 4. The manner in which access network device C obtains the information of the target cell is similar to the manner in which the second access network device obtains the first information in Scenario 1 of the method described in FIG. 4; for specifics, reference may be made to the foregoing description, which is not elaborated herein.

Scenario B: The method described in FIG. 7 may be applied to any one handover procedure. In this scenario, the manner in which access network device B obtains the information of the target cell is similar to the manner in which the first access network device obtains the first information in Scenario 2 of the method described in FIG. 4; for specifics, reference may be made to the foregoing description, which is not elaborated herein.

S706: Access network device B sends, to access network device A, a response message for receiving the request message. Correspondingly, access network device A receives the response message of the request message from access network device B.

The response message carries the key of the target cell of the terminal device.

Optionally, if the derivation manner adopted by access network device B is the vertical derivation manner, access network device B may further send information 3 to access network device A, where information 3 is used to indicate a parameter related to key update. Information 3 corresponds to the third information in the fourth aspect to the sixth aspect of the Summary. By way of example, information 3 may comprise at least one of: an NCC for key update derivation in a next handover, or a key set change indicator for key update derivation in the next handover.

For example, information 3 may be carried in the response message. After receiving information 3, access network device A sends information 3 to the terminal device, and information 3 may be carried in different types of messages, such as a MAC CE, an RRC message that is unencrypted and/or not subjected to integrity protection processing, or a DCI. The terminal device may derive a key based on information 3, and the specific derivation manner is the same as the derivation manner adopted by access network device B.

Optionally, if the terminal device derives the key of the target cell, the terminal device may send an acknowledgement message of information 3 to access network device A, where the acknowledgement message is used to indicate that a new key is used for communication. Alternatively, the function of the acknowledgement message may also be described as indicating that a new key is used for encryption and/or integrity protection.

If the derivation manner adopted by access network device B is the horizontal derivation manner, access network device B may not need to send information 3 to access network device A. The terminal device may derive a key based on the key of the source cell, and the specific derivation manner is the same as the derivation manner adopted by access network device B.

In an embodiment of the present application, the terminal device sends, to the access network device to which the target cell belongs, related information of the source cell/terminal device (that is, the foregoing information 2), such that the access network device to which the target cell belongs can determine the access network device to which the source cell belongs, and can thereby request a key from the access network device to which the source cell belongs. In the foregoing manner, in a subsequent handover, the access network device to which the target cell belongs can proactively obtain a key consistent with that of the terminal device, thereby facilitating the terminal device and the target cell in correctly performing decryption or correctly completing message integrity verification.

In addition, the terminal device can trigger, by using information 2, the access network device to which the target cell belongs to request a key from the access network device to which the source cell belongs in a timely manner, such that subsequent communication between the terminal device and the target cell is performed based on a same key, and communication security can be improved.

For ease of understanding, the following takes as an example a case where a communication system comprises access network device 1, access network device 2, and access network device 3, and describes a first handover process and a second handover process in connection with the two scenarios described above. The first handover may be a handover from access network device 1 to access network device 2. The second handover may be a handover from access network device 2 to access network device 3. It should be understood that other handovers may also be performed after the second handover, and for the specific handover manner, reference may be made to the process of the second handover, which is not elaborated herein.

### Embodiment A:

In this embodiment, the method described in FIG. 7 may be applied to subsequent handovers (the second handover is taken as an example below). In Embodiment A, access network device 1 may correspond to the foregoing access network device C, access network device 2 corresponds to the foregoing access network device B, and access network device 3 corresponds to access network device A.

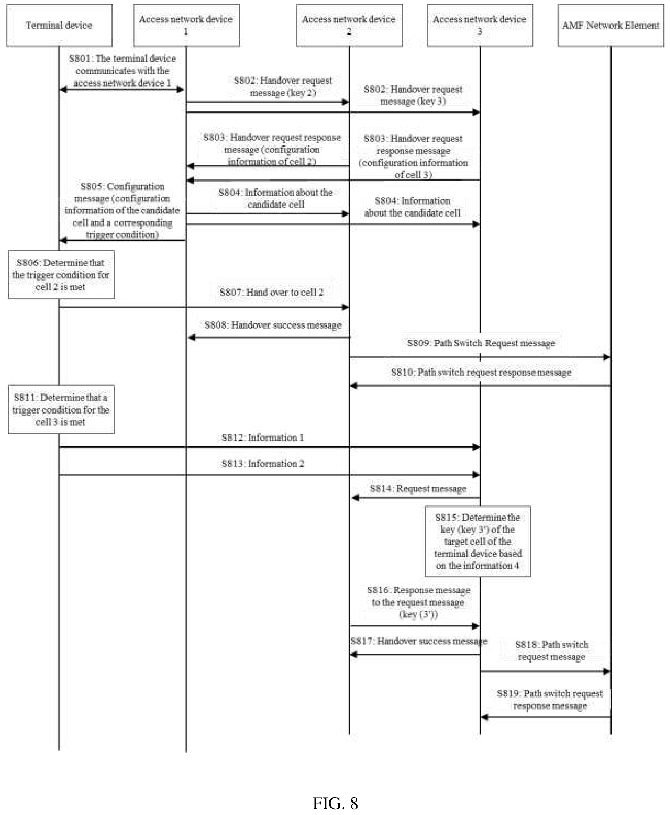

As shown in FIG. 8, the method comprises:
Assume that the terminal device currently accesses access network device 1, and as the terminal device moves, the terminal device may perform the first handover, which specifically comprises steps S801 to S810. For the specific process, reference may be made to the related description regarding the first handover in Embodiment 1 of the method described in FIG. 4, that is, the related descriptions of S501 to S510, and details are not described herein again.

Thereafter, the terminal device may perform the second handover through the following S811 to S819:
S811: The terminal device determines that the trigger condition for cell 3 is satisfied.

The foregoing cell 3 corresponds to the foregoing target cell.

S812: The terminal device sends information 1 to access network device 3.

Information 1 is used to access cell 3. For information 1, reference may be made to the related description of the foregoing S702, and details are not described herein again.

S813: The terminal device sends information 2 to access network device 3.

Information 2 is used by access network device 3 to obtain a key from access network device 2. For information 2, reference may be made to the related description of the foregoing S703, and details are not described herein again.

S814: Access network device 3 sends a request message to access network device 2.

The request message is used to request a key, and the request message carries information 4, the information 4 being used to determine the terminal device. For information 4, reference may be made to the related description of the foregoing S704, and details are not described herein again.

S815: Access network device 2 determines a key of the target cell of the terminal device, key 3', based on information 4.

For the specific manner, reference may be made to the related description of the foregoing S705, and details are not described herein again.

S816: Access network device 2 sends, to access network device 3, a response message for receiving the request message.

The response message carries the key of the target cell of the terminal device, key 3'.

Optionally, the response message may further carry information 3. Access network device 3 may send information 3 to the terminal device. For information 3, reference may be made to the related description of the foregoing S706, and details are not described herein again.

S817: Access network device 3 sends a handover success message to access network device 2.

S818: Access network device 3 sends a path switch request message to the AMF network element.

S819: The AMF network element sends a path switch request response message to access network device 3.

It should be noted that S817 to S819 are optional steps.

For the foregoing S817 to S819, reference may be made to the related descriptions of the foregoing S517 to S519, and details are not described herein again.

Through the foregoing process, the terminal device hands over from cell 2 managed by access network device 2 to cell 3 managed by access network device 3.

As a possible implementation, after the terminal device hands over to cell 3, the terminal device and cell 3 may communicate based on Key 3'. For the manner in which the terminal device generates Key 3', reference may be made to the manner of the key of the target cell of the terminal device in the foregoing S706, and details are not described herein again.

It can be seen from the method described in FIG. 8 that the terminal device may perform at least two handovers, and that the first handover and the subsequent handover (such as the second handover) adopt different manners: in the first handover, the terminal device performs the handover after determining that the trigger condition for the target cell is satisfied; whereas in the subsequent handover, the terminal device, after determining that the trigger condition for the target cell is satisfied, sends information of the source cell/information of the terminal device (that is, information 2) to the access network device to which the target cell belongs, such that the access network device to which the target cell belongs requests a key from the access network device to which the source cell belongs. A manner for the terminal device to distinguish between the first handover and the subsequent handover is described below.

In a possible manner, the terminal device may regard the access network device that the terminal device accesses when first receiving the configuration information of the candidate cells as an initial access network device. When the terminal device performs a first cell handover or access network device handover based on the configuration information of the candidate cells, this may be understood as an initial handover or the first handover; when the terminal device performs a second cell handover or access network device handover using the previously provided configuration information of the candidate cells, this may be understood as a second handover or a subsequent handover. Similarly, when a third handover, a fourth handover, or the like is performed using the previously provided configuration information of the candidate cells, this may also be understood as a subsequent handover.

### Embodiment B:

The difference between Embodiment B and Embodiment A lies in that the first handover in Embodiment A does not adopt the method described in FIG. 7, whereas the first handover in Embodiment B may also adopt the method described in FIG. 7. In Embodiment B, for the first handover, access network device 1 may correspond to the foregoing access network device B, and access network device 2 corresponds to the foregoing access network device A. For the subsequent handover, the second handover is taken as an example below: access network device 1 may correspond to the foregoing access network device C, access network device 2 may correspond to the foregoing access network device B, and access network device 3 corresponds to the foregoing access network device A.

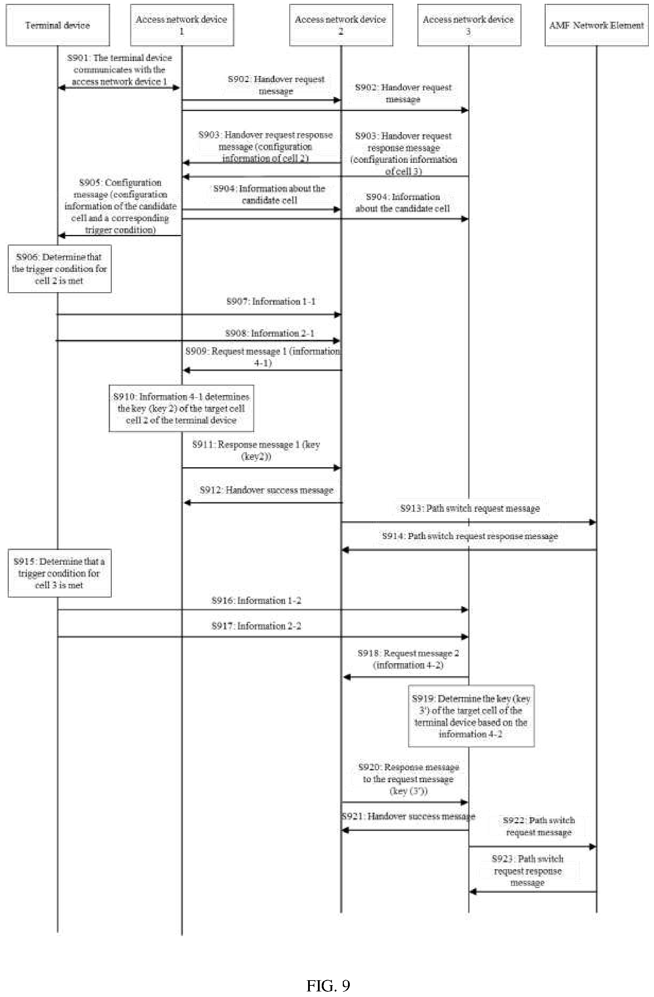

As shown in FIG. 9, the method comprises:
Assume that the terminal device initially accesses access network device 1, and the terminal device may perform the first handover through the following S901 to S911:
S901: The terminal device communicates with access network device 1.
S902: Access network device 1 sends a handover request message to access network device 2 and access network device 3 respectively.

In a possible implementation, the handover request message sent by access network device 1 to access network device 2 may carry a key of access network device 2, key 2. The handover request message sent by access network device 1 to access network device 3 may carry a key of access network device 3, key 3.

In this manner, modifications to the original protocol can be reduced as much as possible, thereby improving forward compatibility.

In another possible implementation, the handover request messages sent by access network device 1 to access network device 2 and access network device 3 may not carry the keys of access network device 2 and access network device 3.

Since the access network device to which the target cell belongs (that is, access network device 2) can obtain a key through S909 to S911 described below, by not carrying the key of access network device 2 in the handover request message in the foregoing manner, signaling overhead can be saved. In addition, in this manner, the access network device to which the source cell belongs in the first handover and in the subsequent handover can adopt the same rule to send handover request messages, thereby reducing the processing complexity of the access network device.

S903: Access network device 2 and access network device 3 send handover request response messages to access network device 1.

It should be noted that S901 to S903 are optional steps.

For specifics of the foregoing S901 to S903, reference may be made to the related descriptions of the foregoing S501 to S503, and details are not described herein again.

S904: Access network device 1 sends information of candidate cells to access network device 2 and access network device 3.

S905: Access network device 1 sends a configuration message to the terminal device.

It should be noted that S904 to S905 are optional steps, and for specifics, reference may be made to the related descriptions of the foregoing S504 to S505, and details are not described herein again.

S906: The terminal device determines that the trigger condition for cell 2 is satisfied.

In the first handover procedure, the foregoing cell 2 corresponds to the foregoing target cell.

S907: The terminal device sends information 1-1 to access network device 2.

Information 1-1 is used to access cell 2. For information 1-1, reference may be made to the description of information 1 in the foregoing S702, and details are not described herein again.

S908: The terminal device sends information 2-1 to access network device 2.

Information 2-1 is used by access network device 2 to obtain a key from access network device 1. By way of example, information 2-1 comprises at least one of: information of the source cell, cell 1, or information of the terminal device.

For specifics of information 2-1, reference may be made to the description of information 2 in the foregoing S703, and details are not described herein again.

S909: Access network device 2 sends request message 1 to access network device 1.

Request message 1 is used to request a key, and request message 1 carries information 4-1, the information 4-1 being used to determine the terminal device. By way of example, information 4-1 comprises at least one of: information of the source cell, cell 1, or information of the terminal device.

For specifics of information 4-1, reference may be made to the description of information 4 in the foregoing S704, and details are not described herein again.

S910: Access network device 1 determines a key of the target cell of the terminal device, cell 2, Key 2, based on information 4-1.

For the specific manner, reference may be made to the related description of the foregoing S705, and details are not described herein again.

S911: Access network device 1 sends, to access network device 2, response message 1 for receiving request message 1.

Response message 1 carries the key of the target cell of the terminal device, cell 2, Key 2.

Optionally, the response message may further carry information 3-1. Access network device 2 may send information 3-1 to the terminal device. By way of example, information 3-1 may comprise at least one of: an NCC 1 for key update derivation in a next handover, or a key set change indicator 1 for key update derivation in the next handover.

For information 3-1, reference may be made to the description of information 3 in the foregoing S706, and details are not described herein again.

S912: Access network device 2 sends a handover success message to access network device 1.

S913: Access network device 2 sends a path switch request message to the AMF network element.

S914: The AMF network element sends a path switch request response message to access network device 2.

It should be noted that S912 to S914 are optional steps.

For the foregoing S912 to S914, reference may be made to the related descriptions of the foregoing S508 to S510, and details are not described herein again.

Through the foregoing process, the terminal device hands over from cell 1 managed by access network device 1 to cell 2 managed by access network device 2.

As a possible implementation, after the terminal device hands over to cell 2, the terminal device and cell 2 may communicate based on key 2. For the manner in which the terminal device generates key 2, reference may be made to the manner of the key of the target cell of the terminal device in the foregoing S706, and details are not described herein again.

Thereafter, the terminal device may perform the second handover through steps S915 to S923:

S915: The terminal device determines that the trigger condition for cell 3 is satisfied.

In the second handover procedure, the foregoing cell 3 corresponds to the foregoing target cell.

S916: The terminal device sends information 1-2 to access network device 3.

Information 1-2 is used to access cell 3. For information 1-2, reference may be made to the description of information 1 in the foregoing S702, and details are not described herein again.

S917: The terminal device sends information 2-2 to access network device 3.

Information 2-2 is used by access network device 3 to obtain a key from access network device 2. By way of example, information 2-2 comprises at least one of: information of the source cell, cell 2, or information of the terminal device.

For specifics of information 2-2, reference may be made to the description of information 2 in the foregoing S703, and details are not described herein again.

S918: Access network device 3 sends request message 2 to access network device 2.

Request message 2 is used to request a key, and request message 2 carries information 4-2, the information 4-2 being used to determine the terminal device. By way of example, information 4-2 comprises at least one of: information of the source cell, cell 2, or information of the terminal device.

For information 4-2, reference may be made to the description of information 4 in the foregoing S704, and details are not described herein again.

S919: Access network device 2 determines a key of the target cell of the terminal device, cell 3, key 3', based on information 4-2.

For the specific manner, reference may be made to the related description of the foregoing S705, and details are not described herein again.

S920: Access network device 2 sends, to access network device 3, response message 2 for receiving request message 2.

The response message carries the key of the target cell of the terminal device, cell 3, Key 3'.

Optionally, the response message may further carry information 3-2. Access network device 3 may send information 3-2 to the terminal device. By way of example, information 3-2 may comprise at least one of: an NCC 2 for key update derivation in a next handover, or a key set change indicator 2 for key update derivation in the next handover.

For information 3-2, reference may be made to the description of information 3 in the foregoing S706, and details are not described herein again.

S921: Access network device 3 sends a handover success message to access network device 2.

S922: Access network device 3 sends a path switch request message to the AMF network element.

S923: The AMF network element sends a path switch request response message to access network device 3.

It should be noted that S921 to S923 are optional steps.

For the foregoing S921 to S923, reference may be made to the related descriptions of the foregoing S517 to S519, and details are not described herein again.

Through the foregoing process, the terminal device hands over from cell 2 managed by access network device 2 to cell 3 managed by access network device 3.

As a possible implementation, after the terminal device hands over to cell 3, the terminal device and cell 3 may communicate based on key 3'. For the manner in which the terminal device generates key 3', reference may be made to the manner of the key of the target cell of the terminal device in the foregoing S706, and details are not described herein again.

In an embodiment of the present application, the terminal device sends, to the access network device to which the target cell belongs, related information of the source cell/terminal device (that is, the foregoing information 2), such that the access network device to which the target cell belongs can determine the access network device to which the source cell belongs, and can thereby request a key from the access network device to which the source cell belongs. In the foregoing manner, in a subsequent handover, the access network device to which the target cell belongs can proactively obtain a key consistent with that of the terminal device, thereby facilitating the terminal device and the target cell in correctly performing decryption or correctly completing message integrity verification.

In addition, the terminal device can trigger, by using information 2, the access network device to which the target cell belongs to request a key from the access network device to which the source cell belongs in a timely manner, such that subsequent communication between the terminal device and the target cell is performed based on a same key, and communication security can be improved.

It should be noted that the method described in FIG. 4 and the method described in FIG. 7 may be implemented separately as independent solutions. Alternatively, the method described in FIG. 4 and the method described in FIG. 7 may also be combined and implemented as one solution. For example, the terminal device may, based on a preset condition, determine whether to use the method described in FIG. 4 or the method described in FIG. 7.

By way of example, the preset condition may be that the channel quality of the serving cell is greater than a threshold, or the preset condition may be that the channel quality of the serving cell is greater than or equal to a threshold. If the preset condition is satisfied, the method described in FIG. 4 is adopted; that is, after the trigger condition for the target cell is satisfied, the terminal device waits to receive the first message, and performs handover after receiving the first message. If the preset condition is not satisfied, the method described in FIG. 7 is adopted; that is, after the trigger condition for the target cell is satisfied, the terminal device performs handover and sends information 1 to the access network device to which the target cell belongs, so as to trigger the access network device to which the target cell belongs to request a key from the access network device to which the source cell belongs.

It should be understood that the preset condition may also have other variants. For example, the preset condition may be that the channel quality of the serving cell is less than a threshold, or the preset condition may be that the channel quality of the serving cell is less than or equal to a threshold; if the preset condition is not satisfied, the method described in FIG. 4 is adopted, and if the preset condition is satisfied, the method described in FIG. 7 is adopted.

As an example, the channel quality of the serving cell may be characterized by parameters such as the RSRP, RSRQ, or SINR of a signal of the serving cell.

Optionally, the foregoing threshold may be defined by a protocol, or may be configured by an access network device (for example, an access network device to which a source cell in the first handover belongs, an access network device to which a source cell in a certain subsequent handover belongs, or an access network device to which the current serving cell belongs), which is not specifically limited in the present application.

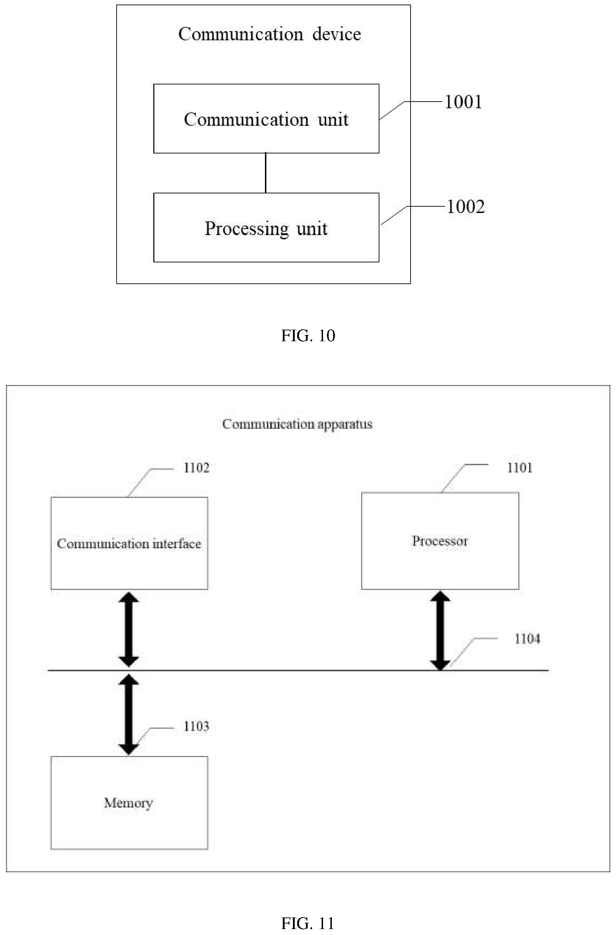

Based on the same inventive concept as the method embodiments, an embodiment of the present application provides a communication apparatus, a structure of which may be as shown in FIG. 10, comprising a communication unit 1001 and a processing unit 1002.

In an implementation, the communication apparatus may specifically be configured to implement the method performed by the terminal device in the embodiment of FIG. 4. The apparatus may be the terminal device itself, or may be a chip in the terminal device, a chip set in the terminal device, or a portion of a chip in the terminal device that is used to perform a related method function. The processing unit 1002 is configured to determine that a trigger condition for a target cell is satisfied and that a first message from a first access network device has been received via the communication unit 1001, where the first message indicates that key notification to a candidate access network device has been completed, the first access network device is an access network device to which a current serving cell of the terminal device belongs, and the target cell is one of the candidate cells managed by the candidate access network device; and to determine, based on the first message, to send a second message to the target cell via the communication unit 1001, where the second message is used to access the target cell.

Optionally, the processing unit 1002 is further configured to determine a key of the target cell based on information of the target cell and third information.

Optionally, the processing unit 1002 is further configured to determine, in a case where a key needs to be updated after handover to the target cell, to wait to receive the first message.

Optionally, the communication unit 1001 is further configured to send a third message to the first access network device, where the third message is used to request the first access network device to notify the candidate access network device of a key.

Optionally, the processing unit 1002 is further configured to determine, in a case where channel quality of the serving cell is greater than or equal to a threshold, to wait to receive the first message.

Optionally, the communication unit 1001 is further configured to receive a fourth message, where the fourth message is used to configure the trigger condition for the target cell.

In an implementation, the communication apparatus may specifically be configured to implement the method performed by the access network device in the embodiment of FIG. 4. The apparatus may be the access network device itself, or may be a chip in the access network device, a chip set in the access network device, or a portion of a chip in the access network device that is used to perform a related method function. The communication unit 1001 is configured to receive first information from a second access network device, where the first information comprises information of at least one candidate cell of the terminal device; the processing unit 1002 is configured to determine a first key based on the first information; the communication unit 1001 is further configured to send the first key to a candidate access network device to which the at least one candidate cell belongs; and to send a first message to the terminal device, where the first message indicates that key notification to the candidate access network device has been completed.

In an implementation, the communication apparatus may specifically be configured to implement the method performed by the terminal device in the embodiment of FIG. 7. The apparatus may be the terminal device itself, or may be a chip in the terminal device, a chip set in the terminal device, or a portion of a chip in the terminal device that is used to perform a related method function. The processing unit 1002 is configured to determine that a trigger condition for a target cell is satisfied; the communication unit 1001 is configured to send first information to a first access network device to which the target cell belongs, where the first information is used to access the target cell; and to send second information to the first access network device, where the second information is used by the first access network device to obtain a key from a second access network device, where the second access network device is an access network device to which a source cell of the terminal device belongs.

Optionally, the communication unit 1001 is further configured to receive third information from the first access network device, where the third information is used to indicate a parameter related to key update. The processing unit 1002 is further configured to determine a key of the target cell based on the third information, and to communicate with the target cell, based on the key of the target cell, via the communication unit 1001.

Optionally, the processing unit 1002 is further configured to determine a key of the target cell by using the horizontal derivation manner; and to communicate with the target cell, based on the key of the target cell, via the communication unit 1001.

Optionally, the processing unit 1002 is further configured to determine, in a case where channel quality of the serving cell is less than or equal to a threshold, to send the first information and the second information after the trigger condition for the target cell is satisfied.

Optionally, the communication unit 1001 is further configured to receive a first message, where the first message is used to configure the trigger condition for the target cell.

In an implementation, the communication apparatus may specifically be configured to implement the method performed by the access network device in the embodiment of FIG. 7. The apparatus may be the access network device itself, or may be a chip in the access network device, a chip set in the access network device, or a portion of a chip in the access network device that is used to perform a related method function. The communication unit 1001 is configured to transmit and receive signals. The processing unit 1002 is configured to: receive, via the communication unit 1001, first information from the terminal device, where the first information is used to access a target cell; receive, via the communication unit 1001, second information from the terminal device, where the second information is used by the first access network device to obtain a key from a second access network device, where the second access network device is an access network device to which a source cell of the terminal device belongs; send, via the communication unit 1001, a request message to the second access network device, where the request message is used to request a key, and the request message carries fourth information, the fourth information being used to determine the terminal device; and receive, via the communication unit 1001, a response message of the request message, where the response message carries a key of the target cell of the terminal device, and the target cell is one of candidate cells managed by the first access network device.

By way of example, the response message further carries third information, where the third information is used to indicate a parameter related to key update.

Optionally, the processing unit 1002 is further configured to send the third information to the terminal device via the communication unit 1001; and to communicate with the terminal device based on the key of the target cell.

The division of modules in the embodiments of the present application is illustrative and is merely a logical functional division; other division manners may be used in actual implementation. In addition, the functional modules in the embodiments of the present application may be integrated in one processor, may exist alone physically, or two or more modules may be integrated in one module. The foregoing integrated module may be implemented either in the form of hardware or in the form of a software functional module. It may be understood that the functions or implementations of the modules in the embodiments of the present application may further refer to the related descriptions of the method embodiments.

In a possible manner, the communication apparatus may be as shown in FIG. 11. The apparatus may be a communication device or a chip in a communication device, where the communication device may be the terminal device in the foregoing embodiments or may be the network device in the foregoing embodiments. The apparatus comprises a processor 1101 and a communication interface 1102, and may further comprise a memory 1103. The processing unit 1002 may be the processor 1101. The communication unit 1001 may be the communication interface 1102. Optionally, the processor 1101 and the memory 1103 may also be integrated together.

The processor 1101 may be a CPU, a digital processing unit, or the like. The communication interface 1102 may be a transceiver, or may be an interface circuit such as a transceiver circuit, or may be a transceiver chip, or the like. The apparatus further comprises: the memory 1103, configured to store programs executed by the processor 1101. The memory 1103 may be a non-volatile memory, such as a hard disk drive (hard disk drive, HDD) or a solid-state drive (solid-state drive, SSD), or may be a volatile memory (volatile memory), such as a random-access memory (random-access memory, RAM). The memory 1103 is any other medium that can be used to carry or store desired program code in the form of instructions or data structures and that can be accessed by a computer, but is not limited thereto.

The processor 1101 is configured to execute the program code stored in the memory 1103, and is specifically configured to perform the actions of the processing unit 1002 described above, which are not described again herein. The communication interface 1102 is specifically configured to perform the actions of the communication unit 1001 described above, which are not described again herein.

The embodiments of the present application do not limit the specific connection medium between the communication interface 1102, the processor 1101, and the memory 1103. In the embodiment of the present application, in FIG. 11, the memory 1103, the processor 1101, and the communication interface 1102 are connected via a bus 1104, where the bus is represented by a thick line in FIG. 11. Connection manners between other components are merely illustrative and are not to be taken as a limitation. The bus may be classified as an address bus, a data bus, a control bus, and the like. For ease of representation, the bus is represented by only one thick line in FIG. 11, but this does not mean that there is only one bus or one type of bus.

An embodiment of the present application further provides a computer-readable storage medium for storing computer software instructions required to be executed by the foregoing processor, comprising a program required to be executed by the foregoing processor.

An embodiment of the present application further provides a communication system, comprising a communication apparatus configured to implement the function of the terminal device in the embodiment of FIG. 4, and a communication apparatus configured to implement the function of the access network device in the embodiment of FIG. 4.

An embodiment of the present application further provides a communication system, comprising a communication apparatus configured to implement the function of the terminal device in the embodiment of FIG. 7, and a communication apparatus configured to implement the function of the access network device in the embodiment of FIG. 7.

Persons skilled in the art should understand that the embodiments of the present application may be provided as a method, a system, or a computer program product. Therefore, the present application may take the form of a fully hardware embodiment, a fully software embodiment, or an embodiment combining software and hardware aspects. Moreover, the present application may take the form of a computer program product implemented on one or more computer-usable storage media (including but not limited to a magnetic disk memory, a CD-ROM, an optical memory, and the like) that contain computer-usable program code.

The present application is described with reference to flowcharts and/or block diagrams of methods, devices (systems), and computer program products according to the present application. It should be understood that each flow and/or block in the flowcharts and/or block diagrams, and a combination of flows and/or blocks in the flowcharts and/or block diagrams, may be implemented by computer program instructions. These computer program instructions may be provided to a processor of a general-purpose computer, a special-purpose computer, an embedded processor, or another programmable data processing device to produce a machine, such that the instructions executed by the processor of the computer or another programmable data processing device produce means for implementing the functions specified in one or more flows in the flowcharts and/or one or more blocks in the block diagrams.

These computer program instructions may also be stored in a computer-readable memory that can direct a computer or another programmable data processing device to operate in a specific manner, such that the instructions stored in the computer-readable memory produce an article of manufacture including instruction means, the instruction means implementing the functions specified in one or more flows in the flowcharts and/or one or more blocks in the block diagrams.

These computer program instructions may also be loaded onto a computer or another programmable data processing device, such that a series of operational steps are performed on the computer or another programmable device to produce a computer-implemented process, whereby the instructions executed on the computer or another programmable device provide steps for implementing the functions specified in one or more flows in the flowcharts and/or one or more blocks in the block diagrams.

Clearly, persons skilled in the art may make various modifications and variations to the present application without departing from the scope of the present application. Thus, if these modifications and variations of the present application fall within the scope of the claims of the present application and their equivalent technologies, the present application is also intended to encompass these modifications and variations.

## Claims

1. A communication method, wherein the method comprises:
determining that a trigger condition for a target cell is satisfied and that a first message from a first access network device has been received, wherein the first message indicates that key notification to a candidate access network device has been completed, the first access network device is an access network device to which a current serving cell of the terminal device belongs, and the target cell is one of candidate cells managed by the candidate access network device; and
determining, based on the first message, to send a second message to the target cell, wherein the second message is used to access the target cell.

2. The method according to claim 1, wherein the first message comprises at least one of: second information, or third information, wherein the second information is used to indicate that key notification to the candidate access network device has been completed, and the third information is used to indicate a parameter related to key update.

3. The method according to claim 2, wherein the third information comprises at least one of: a next hop chaining count, or a key set change indicator.

4. The method according to claim 2 or 3, wherein the method further comprises:
determining a key of the target cell based on information of the target cell and the third information.

5. The method according to claim 4, wherein the information of the target cell comprises at least one of: a physical cell identifier of the target cell, or downlink frequency information of the target cell.

6. The method according to any one of claims 1 to 5, wherein the method further comprises:
determining, in a case where a key needs to be updated after handover to the target cell, to wait to receive the first message.

7. The method according to any one of claims 1 to 6, wherein the method further comprises:
sending a third message to the first access network device, wherein the third message is used to request the first access network device to notify the candidate access network device of a key.

8. The method according to claim 7, wherein the third message further indicates that the trigger condition for the target cell is satisfied.

9. The method according to any one of claims 1 to 8, wherein the method further comprises:
determining, in a case where channel quality of the serving cell is greater than or equal to a threshold, to wait to receive the first message.

10. The method according to any one of claims 1 to 9, wherein the method further comprises:
receiving a fourth message, wherein the fourth message is used to configure the trigger condition for the target cell.

11. A communication method, wherein the method comprises:
receiving first information from a second access network device, wherein the first information comprises information of at least one candidate cell of a terminal device;
determining a first key based on the first information;
sending the first key to a candidate access network device to which the at least one candidate cell belongs; and
sending a first message to the terminal device, wherein the first message indicates that key notification to the candidate access network device has been completed.

12. The method according to claim 11, wherein the first message comprises at least one of: second information, or third information, wherein the second information is used to indicate that key notification to the candidate access network device has been completed, and the third information is used to indicate a parameter related to key update.

13. The method according to claim 12, wherein the third information comprises at least one of: a next hop chaining count, or a key set change indicator.

14. The method according to any one of claims 11 to 13, wherein the information of the at least one candidate cell comprises at least one of: a cell global identifier of the at least one candidate cell, a physical cell identifier of the at least one candidate cell, or downlink frequency information of the at least one candidate cell.

15. A communication method, wherein the method comprises:
determining that a trigger condition for a target cell is satisfied;
sending first information to a first access network device to which the target cell belongs, wherein the first information is used to access the target cell; and
sending second information to the first access network device, wherein the second information is used by the first access network device to obtain a key from a second access network device, and the second access network device is an access network device to which a source cell of the terminal device belongs.

16. The method according to claim 15, wherein the second information comprises at least one of: information of the source cell, or information of the terminal device.

17. The method according to claim 15 or 16, wherein the first information is not encrypted and/or has not been subjected to integrity protection processing.

18. The method according to any one of claims 15 to 17, wherein the method further comprises:
receiving third information from the first access network device, wherein the third information is used to indicate a parameter related to key update;
determining a key of the target cell based on the third information; and
communicating with the target cell based on the key of the target cell.

19. The method according to any one of claims 15 to 17, wherein the method further comprises:
determining a key of the target cell by using a horizontal derivation manner; and
communicating with the target cell based on the key of the target cell.

20. The method according to any one of claims 15 to 19, wherein the method further comprises:
determining, in a case where channel quality of the serving cell is less than or equal to a threshold, to send the first information and the second information after the trigger condition for the target cell is satisfied.

21. The method according to any one of claims 15 to 20, wherein the method further comprises:
receiving a first message, wherein the first message is used to configure the trigger condition for the target cell.

22. A communication method, wherein the method comprises:
receiving first information from a terminal device, wherein the first information is used to access the target cell;
receiving second information from the terminal device, wherein the second information is used by the first access network device to obtain a key from a second access network device, and the second access network device is an access network device to which a source cell of the terminal device belongs;
sending a request message to the second access network device, wherein the request message is used to request a key, and the request message carries fourth information, wherein the fourth information is used to determine the terminal device; and
receiving a response message of the request message, wherein the response message carries a key of the target cell of the terminal device, and the target cell is one of candidate cells managed by the first access network device.

23. The method according to claim 22, wherein the first information comprises at least one of: information of the source cell, or information of the terminal device.

24. The method according to claim 22 or 23, wherein the fourth information comprises at least one of: information of the source cell, or information of the terminal device.

25. The method according to any one of claims 22 to 24, wherein the first information is not encrypted and/or has not been subjected to integrity protection processing.

26. The method according to any one of claims 22 to 25, wherein the response message further carries third information, wherein the third information is used to indicate a parameter related to key update; and
the method further comprises:
sending the third information to the terminal device; and
communicating with the terminal device based on the key of the target cell.

27. A communication apparatus, wherein the communication apparatus comprises a unit or module configured to perform the method according to any one of claims 1 to 10, or comprises a unit or module configured to perform the method according to any one of claims 15 to 21.

28. A communication apparatus, wherein the communication apparatus comprises a unit or module configured to perform the method according to any one of claims 11 to 14, or comprises a unit or module configured to perform the method according to any one of claims 22 to 26.

29. A communication apparatus, wherein the communication apparatus comprises a processor and a memory, wherein the memory is configured to store program instructions, and the processor, when executing the program instructions, causes the method according to any one of claims 1 to 10 to be performed, or causes the method according to any one of claims 15 to 21 to be performed.

30. A communication apparatus, wherein the communication apparatus comprises a processor and a memory, wherein the memory is configured to store program instructions, and the processor, when executing the program instructions, causes the method according to any one of claims 11 to 14 to be performed, or causes the method according to any one of claims 22 to 26 to be performed.

31. A computer-readable storage medium, wherein the computer storage medium stores computer-readable instructions, and the computer-readable instructions, when run on a communication apparatus, cause the method according to any one of claims 1 to 10 to be performed, or cause the method according to any one of claims 11 to 14 to be performed, or cause the method according to any one of claims 15 to 21 to be performed, or cause the method according to any one of claims 22 to 26 to be performed.

32. A computer program product, wherein when the computer program product runs on a device, the computer program product causes the device to perform the method according to any one of claims 1 to 10, the method according to any one of claims 11 to 14, the method according to any one of claims 15 to 21, or the method according to any one of claims 22 to 26.
